# EUROPÄISCHE PATENTANMELDUNG

(11) **EP 1 156 410 A2**
(43) Veröffentlichungstag der Anmeldung: **21.11.2001**
(21) Anmeldenummer: 01111174.7
(22) Anmeldetag: 11.05.2001
(51) Int. Cl.: G06F 3/12

(54) **Automatische Erzeugung von Druckanweisungen**

(30) Priorität: 17.05.2000 US 573113
(71) Anmelder: Heidelberger Druckmaschinen Aktiengesellschaft, 69115 Heidelberg (DE)
(72) Erfinder: Hansen, David Robert, Honeoye Falls, NY 14472 (US)
(74) Vertreter: Franzen, Peter

(57) **Zusammenfassung**

Es wird eine Vorrichtung und ein Verfahren zur Bereitstellung von Anweisungen bezüglich eines gedruckten Endprodukts an eine Bearbeitungsstation (122) für den Auflagendruck offenbart. Das gedruckte Endprodukt besteht aus einer Vielzahl von Dokumenten, die der Kunde liefert und die in eine vorgegebene Reihenfolge und in ein vorgegebenes Format gebracht werden sollen. Die Auftragsannahmestation (104) umfasst einen Computer (114) und einen Empfänger (116), der die Vielzahl von Dokumenten in einem elektronischen Format empfängt. Der Bediener verwendet eine Eingabevorrichtung, um alle Dokumente in einen elektronischen Ordner zu stellen und die Dokumente im Ordner in die für das gedruckte Endprodukt gewünschte Reihenfolge zu bringen. Der Computer (114) ist so programmiert, dass er die Dokumente automatisch in ein druckfertiges Format konvertiert und die Vielzahl von Dokumenten zusammenfügt, so dass ein einziges Dokument entsteht. Der Computer (114) erzeugt außerdem ein elektronisches Job Ticket, das globale Attribute für das gedruckte Endprodukt enthält.

## Beschreibung

Die vorliegende Erfindung betrifft ein System und ein Verfahren zur Bereitstellung von Druckanweisungen für ein gedrucktes Endprodukt an eine Bearbeitungsstation in der Hochleistungsdruckproduktion gemäß den Ansprüchen 1 und 5.

Quasi jeder Computerbesitzer verfügt heute über einen Drucker und ist in der Lage, qualitativ hochwertige Dokumente auszudrucken. Die Möglichkeit, Dokumente in hoher Auflage und mit besonderer Nachbearbeitung (z. B. gebundene Dokumente) herzustellen, bieten jedoch auch heute noch nur kommerzielle Schnelldruckereien und firmeneigene Hausdruckereien. Die Produktion von Dokumenten in hoher Auflage und mit Nachbearbeitung wird allgemein als Hochleistungs- oder Auflagendruckproduktion bezeichnet. Ein Hochleistungs- oder Auflagendrucker ist eine Druckvorrichtung, die zur schnellen Produktion von Dokumenten in hoher Auflage geeignet ist. Diese Drucker haben in der Regel eine hohe Kapazität in der Handhabung von Papier und bieten die Möglichkeit, verschiedene Arten von Daten aus verschiedenen Quellen zu verarbeiten und die Dokumente nach dem Druckvorgang weiter zu bearbeiten, z. B. zu binden. Trotz des hohen Automatisierungsgrads von Hochleistungsdruckern und der weiten Verbreitung der Computertechnologie insbesondere im Bereich des Desktop Publishings ist der Auflagendruck immer noch ein komplexer Prozess, der auch manuelle Schritte einschließt.

In einer Druckerei gehört es zum Tagesgeschäft, dass Kunden eine Vorlage liefern, von der sie ein fertiges Druckprodukt, z. B. eine gebundene Broschüre, ein dreifach gefalztes Faltblatt oder ein mit Ringbindung versehenes Notizbuch, in der Regel in höherer Auflage von beispielsweise 1000 Stück erstellt haben möchten. Eine Kombination aus der Vorlage und den Anweisungen zur Herstellung des fertigen Produkts wird als "Job" oder "Druckauftrag" bezeichnet. Die Vorlage kann in Papierform oder in elektronischer Form, z. B. auf Diskette, CD ROM oder Band, geliefert werden oder auch direkt über ein Netzwerk (z. B. das Internet) an die Druckerei gesandt werden.

Nach der Übergabe der Vorlage erläutert der Kunde seine Anweisungen zur Fertigstellung des Druckprodukts, die ein Angestellter der Druckerei in Form einer Auftragsbeschreibung, eines so genannten Job Tickets, aufnimmt. Das Job Ticket liegt in der Regel in Papierform vor und enthält alle Informationen zur Fertigstellung des Druckprodukts. Anschließend wird der Druckauftrag an den Maschinenbediener weitergeleitet, der die Maschine zur Produktion des Druckprodukts einrichtet. Der Maschinenbediener hat die Aufgabe, die Vorlage für den Druckvorgang vorzubereiten und die Maschine mit dem für den Druckauftrag geeigneten Material zu bestücken, d. h. den Papiervorrat und den Vorrat an zum Binden benötigtem Material aufzufüllen, um eine reibungslose Produktion des gewünschten Produkts zu gewährleisten.

Diese Aufgabe erscheint relativ einfach; sie kann jedoch durch verschiedene Faktoren schnell höchst kompliziert werden. Die vom Kunden gelieferten Vorlagen sind z. B. häufig nicht zum direkten Einsatz im Auflagendrucker geeignet, sondern liegen unter Umständen nur in Form von Rohmanuskripten vor, die grundlegend formatiert werden müssen, um den typographischen Erfordernissen (z. B. benötigte Seitenränder) gerecht zu werden. Es kann auch der Fall sein, dass die Vorlage zwar formatiert ist, die Formatierung aber für das Binden der Druckprodukte ungeeignet ist, da der Text z. B. zu wenig Rand lässt, so dass beim Binden ein Teil des Texts unlesbar wird. In manchen Fällen, z. B. bei der Produktion von Büchern, muss die Vorlage besonders bearbeitet werden, damit z. B. die erste Seite eines Kapitels auf der Vorderseite einer Seite erscheint. Diese Bearbeitung wird als Ausschießen bezeichnet und ist für Broschüren, Flugblätter und alle anderen Arten von Druckprodukten meist unterschiedlich. Außerdem besteht die Möglichkeit, dass der Kunde mehrere separate Vorlagen liefert, die zu einem gebundenen Buch mit Einband zusammengefasst werden sollen.

Ein weiterer Aspekt, der den Druckauftrag kompliziert, betrifft die Auswahl der benötigten Materialien und das Bestücken der Maschine. Ein Druckauftrag erfordert mitunter die Verwendung verschiedener Papiersorten, z. B. Papier unterschiedlicher Grammatur oder Farbe. Außerdem erfordern manche Druckaufträge das Einfügen von Registern an bestimmten Stellen im Dokument. Bei wieder anderen Druckaufträgen soll möglicherweise jede Seite eine bestimmte Anmerkung enthalten, z. B. eine sog. Bates-Nummer, wie sie in den USA für Dokumente, welche die Tabakindustrie betreffen, vorgeschrieben ist.

Bei einem derart komplizierten Verfahren zur Herstellung eines fertigen Druckprodukts treten unweigerlich Fehler auf, z. B. besteht die Gefahr, dass die Maschine mit dem falschen Papier bestückt wird oder dass die Seitenränder zu klein berechnet werden und sich der Text zu nah am für die Bindung benötigten Bereich befindet. Hochleistungsdrucker arbeiten mit sehr hohen Geschwindigkeiten und produzieren z. B. mehr als eine Seite pro Sekunde. Daher werden Fehler im fertigen Druckprodukt oft erst nach geraumer Zeit erkannt, wodurch Zeit und Material verschwendet werden.

Demgemäß besteht Bedarf an einem effizienten System und einem effizienten Verfahren zur Steuerung und Überwachung des Workflows für den Auflagendruck.

Es ist daher Aufgabe der Erfindung, eine Vorrichtung und ein Verfahren der eingangs genannten Art zu schaffen, mittels derer Druckanweisungen für ein gedrucktes Endprodukt für eine Auftragsbearbeitungsstation bereitgestellt werden kann.

Diese Aufgabe wird mit einem Verfahren gemäß den Merkmalen des Anspruchs 5 und einer Vorrichtung gemäß den Merkmalen des Anspruchs 1 gelöst. Weitere Merkmale ergeben sich aus den Unteransprüchen.

Ein gedrucktes Endprodukt besteht aus einer Vielzahl von Dokumenten, die ein Kunde geliefert hat und die in einer vorgegebenen Reihenfolge und in einem vorgegebenen Format zusammengefügt werden sollen. Der Kunde übergibt die Vielzahl von Dokumenten einem Druckereiangestellten an einer Auftragsannahmestation, die einen Computer und ein Empfängerelement umfasst, das die Vielzahl von Dokumenten in elektronischer Form aufnimmt. Bei dem Empfängerelement kann es sich z. B. um einen Scanner oder ein Laufwerk handeln, das Datenträger liest. Das Empfängerelement leitet die Dokumente in elektronischer Form an den Computer weiter. Mittels einer Eingabevorrichtung, z. B. einer Tastatur oder einer Maus hat der Druckereiangestellt die Möglichkeit, Anweisungen in den Computer einzugeben. Der Computer erhält die vom Angestellten eingegebenen Anweisungen. Der Druckereiangestellte nutzt die Eingabevorrichtung, um die Dokumente in ein elektronisches Verzeichnis zu stellen und sie in die für das gedruckte Endprodukt gewünschte Reihenfolge zu bringen. Der Computer ist so programmiert, dass er die Dokumente automatisch in ein druckfertiges Format konvertiert und sie so zusammenführt, dass die Vielzahl von Dokumenten ein einziges Dokument bilden. Der Computer erzeugt weiterhin eine elektronische Auftragsbeschreibung, ein so genanntes Job Ticket, das globale Attribute für das gedruckte Endprodukt enthält. Die Ausgabe des Computers wird anschließend an eine Auftragsbearbeitungsstation geschickt.

Die Merkmale der vorliegenden Erfindung werden in der folgenden Beschreibung bevorzugter Ausführungsformen in Zusammenhang mit den beigefügten, nachfolgend aufgeführten Zeichnungen näher erläutert.

Es zeigen:
- Fig. 1: ein Flussdiagramm, in dem ein bevorzugter Workflow für den Auflagendruck dargestellt ist,
- Fig. 2: ein Flussdiagramm, in dem die verschiedenen Funktionalitäten der bevorzugten Ausführungsform des Workflows dargestellt sind,
- Fig. 3: ein Blockdiagramm einer bevorzugten Software-Architektur, wie sie im Zusammenhang mit den in Fig. 1 und 2 gezeigten Ausführungsformen eingesetzt werden kann,
- Fig. 4: ein Display einer grafischen Benutzerschnittstelle (GUI) gemäß der bevorzugten Ausführungsform,
- Fig. 5: eine Möglichkeit der Integration der bevorzugten Ausführungsform in den Workflow der Druckerei, und
- Fig. 6: eine Möglichkeit der Integration der bevorzugten Ausführungsform in den Workflow der Druckerei, wobei eine Komponente zur Automatisierung des Workflows vorgesehen ist.
- Fig. 7: eine bevorzugte Ausführungsform eines Systems, das die erfindungsgemäße Verteiler-Vorrichtung zum Zuteilen von Bearbeitungsstationen umfasst.

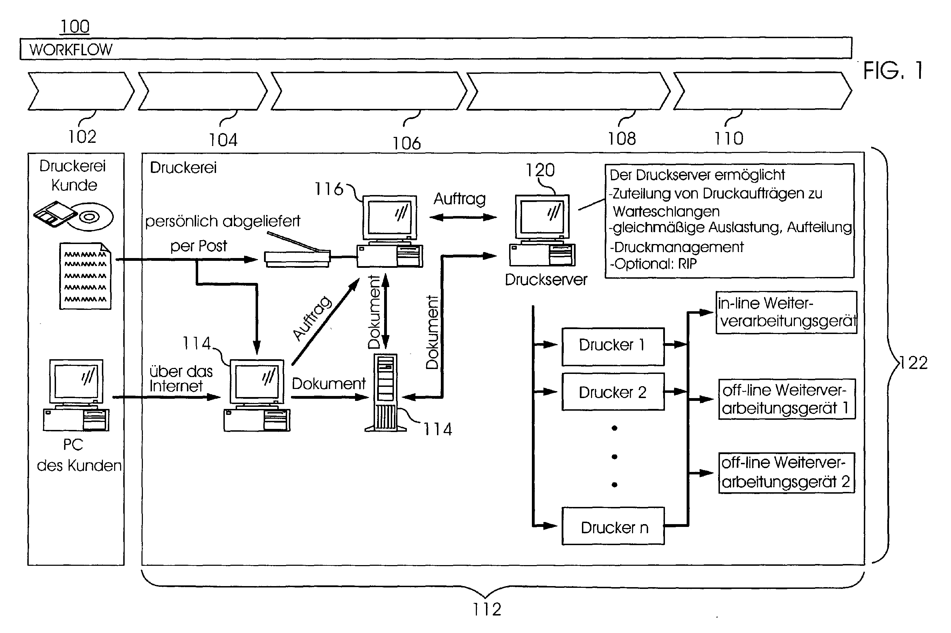

In Fig. 1 ist ein Flussdiagramm des Produktions-Workflows 100 in einer typischen Druckerei für den Auflagendruck dargestellt. Ein Workflow enthält die Aufgaben, Prozessschritte, betroffenen Organisationen oder Personen, Informationen zu den Eingaben und der gewünschten Ausgabe, sowie die benötigten Tools für jeden Schritt eines Geschäftsvorgangs. Wie nachfolgend erläutert wird, kann der Workflow-Ansatz zur Analyse und Durchführung eines Geschäftsvorgangs wie dem Auflagendruck mit einem objektorientierten Ansatz kombiniert werden, der sich auf die einzelnen zugehörigen Objekte und Prozesse wie Dokumente, Seiten, Daten und Datenbanken konzentriert. Die Bezeichnung "objektorientiert" wie sie im Sinne der vorliegenden Anmeldung im Zusammenhang mit den beschriebenen Ausführungsformen verwendet wird, bedeutet nicht, dass ein objektorientierter Programmierungsansatz die einzige Möglichkeit zur Umsetzung der beschriebenen Ausführungsformen bildet.

Fig. 1 zeigen ein typisches Computernetzwerk 112 in einer Druckerei, insbesondere in einer Digitaldruckerei, das Computer-Workstations 114, 116, Server 118, 120 und Hochgeschwindigkeits-Ausgabegeräte 122 einschließt. Die Server 118, 120 umfassen Netzwerk-Server 118 und Druckserver 120. Die Topologie des Netzwerks 112 ist in der Regel in seiner Struktur an den Workflow 100 der Druckerei angepasst. Das Netzwerk kann z. B. als ein verkabeltes oder kabelloses Ethernet oder als eine beliebige andere Form eines lokalen Netzwerks (local area network, LAN) ausgebildet sein. Weiterhin kann das Netzwerk 112 über Kabelverbindungen oder kabellose Verbindungen zu größeren Netzwerken, z. B. zum Internet, oder über ein virtuelles privates Netzwerk zu anderen LAN verfügen.

Der Produktions-Workflow 100 umfasst die Prozessschritte des Auftragsbeginns 102, des Auftragseingangs 104, der Auftragsbearbeitung 106, der Druckproduktion 108 und der Auftragsvollendung 110. Mehrere dieser Prozessschritte können kombiniert werden, oder es können weitere Prozessschritte vorgesehen sein. Am Auftragsbeginn 102 geht der Auftrag in Form einer Vorlage und Anweisungen ein; diese Informationen zusammen bilden den Druckauftrag oder Job. Dabei liefert der betreffende Kunde den Druckauftrag oder Job persönlich in Papierform oder in elektronischer Form in der Druckerei ab oder übermittelt ihn per Telefon, Fax, Post, E-Mail oder über ein Netzwerk, z. B. das Internet. Ein Druckauftrag oder Job kann mehrere Dokumente und mehrere Anweisungsfolgen umfassen, z. B. auch mehrere Dokumente, die jeweils ein Kapitel eines Buchs darstellen, und ein Dokument für den Bucheinband. Dieser beispielhafte Druckauftrag kann weiterhin die Anweisungsfolge zur Herstellung des Buchs aus den einzelnen Kapiteln und eine Anweisungsfolge zur Herstellung des Einbands umfassen. Wie im Folgenden erläutert wird, kann weiterhin eine dritte Anweisungsfolge vorliegen, die das Zusammenfügen von Buch und Einband betrifft.

Bei Auftragseingang 104 erhält die Druckerei den Druckauftrag, der nun in das Produktionssystem oder den Workflow der Druckerei eingegliedert wird. Die Anweisungen des Kunden sind in der Regel auf einem besonderen Formular aufgeführt, das als Auftragsbeschreibung oder "Job Ticket" bezeichnet wird. Dieses Ticket kann auch elektronisch erstellt worden sein und in elektronischer Form vorliegen. Für Standard-Anweisungen können vorgefertigte Job Tickets vorgesehen sein. Eine Druckerei kann z. B. vorgefertigte Job Tickets bereithalten, die Anweisungen für das Vervielfältigen von Dokumenten, deren Lochung mit drei Löchern und deren anschließendes Zusammenfügen durch Dreiring-Bindung enthalten. Wenn ein derartiger Auftrag häufig nachgefragt wird, können solch vorgefertigte Job Tickets Zeit und Aufwand sparen, da der Druckereiangestellte, der den Auftrag entgegennimmt, nur kundenspezifische Detail (z. B. die Auflagenhöhe) auf dem Formular vermerken muss. Vorgefertigte Job Tickets können also zur Standardisierung der Auftragsabwicklung und zur Fehlervermeidung beitragen. In einer besonders einfachen Form kann der Auftragseingang 104 nur darin bestehen, dass die Vorlagendokumente zusammen mit den Auftragsanweisungen eingehen, ein Job Ticket erstellt wird und der Druckauftrag in einen Ordner einsortiert und bis zu seiner Bearbeitung in nachfolgenden Prozessschritten abgelegt wird.

In Druckereien, die Druckaufträge elektronisch abwickeln, wird im Rahmen des Auftragseingangs 104 der Auftrag in das elektronische Produktionssystem der Druckerei eingegeben. Wurde die Vorlage in Papierform geliefert, so muss sie zunächst elektronisch in das Computersystem der Druckerei eingelesen werden. Bei in elektronischer Form vorliegenden Vorlagen müssen die Vorlagendateien im Computersystem der Druckerei gespeichert werden.

Für den Auftragseingang 104 umfasst das Netzwerk 112 mindestens eine Kundenbereichs-Workstation 114, die sich im Auftragsannahme-Bereich der Druckerei oder am Arbeitsplatz eines Druckereiangestellten befindet oder aber zur Selbstbedienung für den Kunden aufgestellt wurde. Diese Workstations 114 werden für den Auftragseingang 104 verwendet und können in der Regel die verschiedensten Arten elektronischer Medien verarbeiten, z. B. Disketten, CD ROMs, Bänder etc, und/oder Aufträge über das Internet oder eine andere Art von Netzwerkverbindung mit dem Kunden empfangen. Außerdem sind diese Workstations 114 in der Regel für die verschiedensten Dateiformate geeignet, z. B. die Formate der Microsoft-Office™-Produktfamilie, die von der Microsoft Corporation mit Sitz in Redmond, Washington hergestellt werden, sowie die Dateiformate anderer Desktop-Publishing-Programme wie Aldus Pagemaker™ oder QuarkXpress™ der Firma Quark Inc. in Denver, Colorado. Weiterhin sollten diese Workstations 114 auch zur Bearbeitung von "druckfertigen" Dateiformaten wie Portable Document Format™ (PDF-Dateien), Postscript™ (PS-Dateien), beide von der Firma Adobe Systems, Inc. in San Jose, Kalifornien oder Printer Control Language (PCL-Dateien) der Firma Hewlett Packard in Palo Alto, Kalifornien geeignet sein, die im Folgenden behandelt werden. Darüber hinaus sind die Workstations 114 vorzugsweise auch für Bilddateien z. B. im Tagged Image File Format (TIFF-Dateien), im Bitmap Format (BMP-Dateien) und/oder für PCX-Dateien geeignet. Die Workstations 114 können auch einen Scanner 116 umfassen, mittels dessen Vorlagen in Papierform in das Computersystem eingelesen werden können. Da Scanner jedoch kompliziert in der Handhabung sind, befinden sie sich in vielen Druckereien eher im Bereich der Auftragsbearbeitung 106 und werden nur von geschultem Fachpersonal bedient, wie im Folgenden näher erläutert wird. Die Workstations 114 dienen ferner zur Ausarbeitung eines Job Tickets in Papierform oder in elektronischer Form, das sämtliche Anweisungen zur Durchführung des Druckauftrags beinhaltet. Die Erstellung des Job Tickets kann automatisch, z. B. anhand von vorgefertigten Tickets, oder manuell erfolgen oder eine Kombination aus automatischen und manuellen Schritten vorsehen und wird im Folgenden näher erläutert.

Die Auftragsbearbeitung 106 umfasst das Bearbeiten der Dokumente für den Druckvorgang auf der Basis der im Ticket aufgeführten Anweisungen. In Papierform vorliegende Dokumente werden im Rahmen der Auftragsbearbeitung 106 zur Erzeugung einer sinngetreuen und fehlerfreien elektronischen Wiedergabe zunächst gescannt. Sobald die Dokumente in elektronischer Form vorliegen, müssen sie in ein Dateiformat gebracht werden, in dem sie sowohl editiert als auch gedruckt werden können. Dadurch wird vermieden, dass die Druckereiangestellten mit verschiedenen Programmen arbeiten müssen. Außerdem müssen komplexe Dokumente nicht erst aus unterschiedlichen elektronischen Dateiformaten zusammengefügt werden.

Ein Kunde kann z. B. zwei verschiedene Dokumente liefern, von denen eines den Inhalt eines Buches und das andere Fotos beinhaltet, die an bestimmten Stellen in das Buch eingefügt werden sollen. Das zusammengestellte Buch soll schließlich möglicherweise mit fortlaufenden Seitenzahlen versehen werden. Der Inhalt des Buchs kann z. B. als Microsoft-Word™-Datei vorliegen, während die Bilder möglicherweise als Adobe-Photoshop™-Datei gespeichert sind. Es ist zwar mittels der beiden Softwarepakete möglich, zu ermitteln, auf welchen Seiten die Fotos eingefügt werden sollen und einen entsprechende Seitennummerierung einzufügen, dies ist jedoch ein zeitaufwändiger und komplizierter Vorgang. Hierzu muss der Bearbeiter mit vielen unterschiedlichen Softwarepaketen vertraut sein, und es besteht immer die Gefahr, dass er mit einer vom Kunden gewählten bestimmten Software nicht umgehen kann. Daher ist es effizienter, jedes der vorliegenden Dateiformate in ein einheitliches Format zu bringen, welches es dem Bearbeiter ermöglicht, den Druckauftrag mittels einer einzigen Software-Schnittstelle zu bearbeiten. In den bevorzugten Ausführungsformen der Erfindung werden alle Dokumente unabhängig davon, ob sie in Papierform oder elektronischer Form vorliegen, in ein "druckfertiges" Dateiformat konvertiert. Hierzu wird vorzugsweise das PDF- Format verwendet.
Ein druckfertiges Dateiformat ist hier definiert als ein Dateiformat, das sowohl die zu druckenden Daten als auch die Steuerungsanweisungen für den Drucker enthält, die direkt vom internen Prozessor eines Druckers (oder eines anderen Geräts zur Ausgabe von Dokumenten in Papierform oder auf einem sonstigen Ausgabemedium) interpretiert werden können, so dass die Daten in gerasterter Form auf das Ausgabemedium gebracht werden. Bei der Rasterung werden Bilddaten an einer bestimmten Stelle auf dem Ausgabemedium positioniert. Derartige Dateiformate sind z. B. PDF-Dateien, PS-Dateien sowie PCL-Dateien. Als nicht druckfertig gelten die meisten mit Hilfe von Anwendungsprogrammen für Personalcomputer erstellten Dateien, z. B. Microsoft-Word™-Dateien. Diese Dateien müssen zunächst in ein druckfertiges Dateiformat gebracht werden, bevor sie gedruckt werden können.

Weiterhin gibt es Bilddatei-Formate, z. B. TIFF-Dateien, die zwar Bilddatenbits enthalten, deren Format bereits ihre Ausgabestelle auf dem Ausgabemedium definiert, aber keine Druckersteuerungsinformationen, die vom internen Prozessor des Druckers interpretiert werden können. Diese Dateiformate gelten im Sinne dieser Anmeldung nicht als druckfertige Dateiformate. Durch die Verwendung eines druckfertigen Dateiformats kann die Rasterung der Bilddaten so weit wie möglich, fast bis unmittelbar vor dem Aufdrucken der Bilddaten auf das Ausgabemedium hinausgezögert werden. Dies ermöglicht eine optimale Ausnutzung des Hochleistungsdruckers 122, indem der Rasterungsvorgang durch die interne Steuerungslogik des Hochleistungsdruckers 122 optimiert werden kann.
Dadurch ist am ehesten gewährleistet, dass das fertige Produkt den Erwartungen des Bearbeiters entspricht.

Für die Auftragsbearbeitung 106 umfasst das Computer-Netzwerk 112 Bearbeitungsstationen 116 und Netzwerk-Server 118, die mit den Workstations 114 im Bereich der Auftragsannahme vernetzt, d. h. direkt oder indirekt über eine Zwischenkomponente oder mehrere Zwischenkomponenten mit diesen verbunden sind. Derartige Zwischenkomponenten können sowohl als Hardware- als auch als Software-Komponenten ausgebildet sein. Die Bearbeitungsstationen 116 führen vorzugsweise eine Workflow-Management-Software aus, die, wie nachfolgend näher beschrieben ist, das Bearbeiten, Editieren und Drucken von Druckaufträgen ermöglicht. Der/die Netzwerkserver 118 umfasst/umfassen eine Dokumentenbibliothek, die ein Manipulieren, Bearbeiten und Archivieren von Druckaufträgen bzw. von zu einem Druckauftrag gehörigen Dokumenten und/oder Tickets ermöglicht. Außerdem erleichtert und überwacht der Netzwerkserver 118 den Datenfluss von den Workstations 114 im Auftragsannahme-Bereich zu den Bearbeitungsstationen 116 und von dort zu den Druckservern 120 oder den Ausgabegeräten 122. Beispiele für Dokumentbibliotheken sind das Dokumentenmanagementsystem Intra.Doc von Intranet Solutions, Inc. in Eden Prairie, Minnesota, sowie das Dokumentenmanagementsystem DOCFusion von Hummingbird, Inc. in York, Ontario, Canada. In einer bevorzugten Ausführungsform sind die Bearbeitungsstationen 116 als Imagesmart-Workstations von Heidelberg Digital, L.L.C. in Rochester, New York ausgebildet. Alternativ kann auch einen geeignete Computer-Hardware-Plattform verwendet werden, die z. B. einen Prozessor der Pentium Reihe der Firma Intel Corporation, Santa Clara, Kalifornien oder besseren Prozessor mit wenigstens 64 MB RAM, mindestens einer 20 Gigabyte Hard Disk und ein geeignetes Display umfassen. Die Netzwerk-Server 118 arbeiten weiterhin vorzugsweise mit einem Open Document Management Architecture (ODMA) Standard und bieten Möglichkeiten des Dokumentmanagements und des Speicherns mit Skalieroptionen.

Durch die Bearbeitungsstationen 116 hat die Druckerei ferner die Möglichkeit, die Qualität des Produktionsprozesses zu erhöhen, indem dem Kunden Zusatzleistungen angeboten werden. An den vom Kunden gelieferten Vorlagen können z. B. Veränderungen vorgenommen werden, die der Kunde selbst nicht vornehmen konnte oder wollte. Dazu gehören z. B. das Einfügen von Seitenzahlen über mehrere Einzeldokumente, das Hinzufügen von Bates-Nummern, die Anpassung des Seitenlayouts für Registerblätter und das Ausrichten der ausgegebenen Produkte für den Bindevorgang. Außerdem bieten die Bearbeitungsstationen 116 die Möglichkeit der Fehlerbehebung in der Vorlage, wenn z. B. fehlerhafte Bildstellen eines gescannten Dokuments sowie überflüssige Textstellen oder Flecken entfernt werden sollen. Die Bearbeitungsstationen 116 können auch dazu dienen, Ungenauigkeiten in den fertigen Produkten zu verhindern, die z. B. beim Binden entstehen, wenn eine Broschüre oder ein Prospekt mittels Signatur-Ausschießens hergestellt wird und beim Positionieren der Bilder auf dem Papier die Dicke der Bindung in Abhängigkeit von der Seitenzahl des Produkts nicht berücksichtigt wurde, insbesondere bei Falzbogensets, so dass sich das Bild auf den Seiten nach innen verschiebt, je näher es sich am Einband befindet. Dieses Phänomen kann verhindert werden, indem man die Bilder beim Ausschießen der Signaturen des Dokuments entsprechend geringfügig verschiebt. Eine weitere Funktion der Bearbeitungsstation 116 ist die Gestaltung des Layouts der Dokumentenseiten für die Endausgabe. Außerdem können die Seiten des Dokuments beliebig verschoben und vertauscht werden, es können Leerseiten eingefügt werden, die Seiten können verkleinert und verschoben werden, es können Druckbogen erzeugt werden und es können mehrere Seiten auf einem Ausgabebogen positioniert werden, um z. B. Proofs, Broschüren oder Prospekte herzustellen. Weiterhin ermöglicht es die Bearbeitungsstation 116 dem Bearbeiter, dem Dokument Anmerkungen wie Bates-Nummern, Seitenzahlen, Logos und Wasserzeichen hinzuzufügen. Alle diese Leistungen bedeuten einen Mehrwert für das fertige Produkt. Formatierungen und andere Veränderungen (z. B. die Verschiebung eines Seitenrands) können auf das gesamte Dokument angewandt werden oder nur auf einzelne Seiten. Derartige Veränderungen am Dokument werden als Dokument-/Seiteneigenschaften oder -attribute oder aber auch als Ausnahmen bezeichnet, da sie in der Regel bestimmte Einstellungen der ursprünglichen, vom Kunden vorbereiteten Formatierung des Dokuments umstoßen.

Die nächste Stufe des Druckproduktions-Workflows 100 ist die eigentliche Druckproduktion 108, in der die endgültige Form der zu druckenden Dokumente an den Druckserver 120 und von diesem an das Ausgabegerät 122 weitergeleitet wird. In kleineren Druckereien kann dies ein Angestellter erledigen, der den druckfertigen Auftrag nimmt und zum gewünschten Ausgabegerät 122 bringt, um den Druckauftrag zu starten. In dieser Stufe werden die verschiedenen Ausgabemöglichkeiten der Druckerei ausgenutzt. Z. B. werden Druckaufträge in die Warteschlange der gewünschten Ausgabegeräte 122 gestellt, Druckaufträge freien Geräten 122 zugewiesen, die Auslastung der unterschiedlichen Geräte 122 ausgeglichen, sowie weitere vorbereitende Schritte durchgeführt, z. B. die Aufteilung eines Druckauftrags oder dessen Bearbeitung mittels eines Raster Image Prozessors (RIP). Ein RIP ist die Hardware und/oder Software, die druckfertige Daten in gerasterte Bilder umwandelt, die auf ein Ausgabemedium gedruckt werden.

Der für die Druckproduktion 108 verwendete Druckserver 120 ist mit den Bearbeitungsstationen 116 und dem Netzwerk-Server 118 über das Netzwerk 112 verbunden. Außerdem ist der Druckserver 120 mit den verschiedenen Ausgabegeräten 122 der Druckerei verbunden. Bei manchen Ausgabegeräten 122 ist eine elektronische Übertragung der auszugebenden Daten unter Umständen nicht möglich, so dass ein manueller Schritt erfolgen muss. Dies ist z. B. bei besonderen Bindegeräten der Fall, bei denen die halbfertigen Dokumente von Hand in das Bindegerät eingelegt werden müssen, um den Produktionsvorgang abzuschließen. Der Druckserver 120 ist vorzugsweise als ein separater Computer ausgebildet, der in das Netzwerk 112 integriert ist. Es können jedoch auch Druckserver in Form von auf einem Netzwerk-Server 118, einer Bearbeitungsstation 116 oder einer Workstation 114 im Bereich der Auftragsannahme ablaufender Software verwendet werden. In der bevorzugten Ausführungsform umfasst der Druckserver 120 eine unabhängige Computer-Workstation mit einem Betriebssystem wie UNIX oder Windows NT, einem Software-Druckserver und einer Software-Druckserver-Anwendung. Die Druckserver-Anwendung dient als Bediener-Schnittstelle zur Konfiguration und Steuerung des Druckserverbetriebs. Das Druckservermedium führt die automatisierten Prozesse des Druckservers aus. Diese Prozesse umfassen das Spooling (SPOOL = Simultaneous Peripheral Operations On Line) von Druckaufträgen und deren Inhalt (d. h. das Dokument), die Zuweisung von Druckaufträgen zu Warteschlangen (Queueing), das Zuordnen von Druckaufträgen zum geeigneten Ausgabegerät auf der Basis der Eigenschaften des Druckauftrags und des jeweiligen Geräts, die gleichmäßige Verteilung der Druckaufträge auf die verschiedenen Ausgabegeräte zur besseren Auslastung der Drucker, wobei z. B. Farbdruckaufträge von Schwarzweiß-Druckaufträgen getrennt werden, sowie die Funktion als Kommunikationspfad, indem eingehende Kommunikations- und Druckprotokolle empfangen werden und in Kommunikations- und Druckprotokolle konvertiert werden, die das Ausgabegerät 122 versteht.
Die letzte Stufe des Druckproduktions-Workflows 100 ist die Auftragsvollendung 110, bei der mittels des Hochleistungs-Ausgabegeräts 122 das fertige Produkt hergestellt wird. Ein Hochleistungs-Ausgabegerät 122 ist ein Computer-Ausgabegerät, z. B. ein Digimaster™ Digital High Volume Printer der Firma Heidelberg Digital, L.L.C. oder der NexPress Farbdrucker der Firma NexPress in Rochester, New York, das in der Lage ist, große Mengen von Dokumenten mit beliebigem Inhalt und verschiedenen Stufen der Weiterverarbeitung (z. B. heften oder binden) mit hoher Geschwindigkeit zu produzieren.

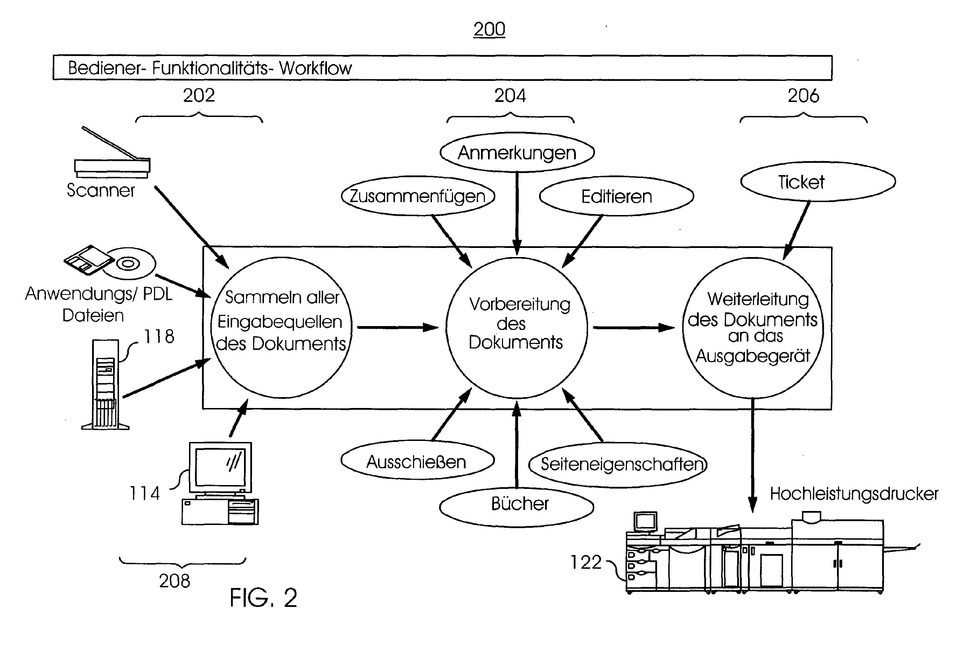

In Fig. 2 ist ein Flussdiagramm gezeigt, das den Bediener-Workflow 200 einer bevorzugten Ausführungsform des Auftragseingangs 104 und der Auftragsbearbeitung 106 darstellt. Der Bediener-Workflow 200 umfasst ein Eingabestadium 202, eine Vorbereitungsphase 204 und ein Produktionsstadium 206. Im Eingabestadium 202 werden alle Dokumente des Druckauftrags von den unterschiedlichen Eingabequellen 208 gesammelt. Wie bereits erläutert, werden die gesammelten Dokumente in ein druckfertiges Format, vorzugsweise PDF, gebracht. Diese Konvertierung kann manuell oder automatisch oder als eine Kombination aus manuellen und automatischen Schritten erfolgen. Dabei kann z. B. der Druckereiangestellte, der die Dokumente vom Kunden entgegennimmt und in die Workstation 114 im Bereich der Auftragsannahme eingibt, ein spezielles Verzeichnis auf dem Netzwerkserver 118 erstellen, in das Dateien verschiedener Formate gestellt werden.
Eine automatisierte Logik, die dieses Verzeichnis überwacht, erkennt, dass Dateien in diesem Verzeichnis gespeichert werden und konvertiert sie automatisch in ein druckfertiges Format (oder markiert sie zur manuellen Konvertierung). Dokumente, die nicht automatisch von dieser Logik konvertiert werden können, können zur manuellen Konvertierung gekennzeichnet werden. Die konvertierten Dokumente werden anschließend an die Vorbereitungsphase 204 geleitet, wo sie für den Auflagendruck aufbereitet werden. Diese Weiterleitung kann ebenfalls dadurch erfolgen, dass die Dokumente in ein gesondertes Verzeichnis auf dem Netzwerk-Server 118 gestellt werden, das über die Bearbeitungsstationen 116 zugänglich ist, oder dadurch, dass die Dokumente direkt an die Bearbeitungsstation 116 übermittelt werden. Dieser Vorgang kann automatisch oder manuell erfolgen und kann vorsehen, dass die Dokumente bis zu ihrer Bearbeitung in eine Warteschlange gestellt werden. Dieser Prozess kann auch eine manuelle oder automatische Bestimmung der Fähigkeiten und des Kenntnis- oder Ausbildungsstands sowie die aktuelle Arbeitsbelastung und die in der Warteschleife anstehenden Druckaufträge der Druckereiangestellten, die gegenwärtig in die verfügbaren Bearbeitungsstationen 116 eingeloggt sind, einschließen. Unter Berücksichtigung dieser Aspekte kann der Druckauftrag automatisch oder manuell an den Angestellten geleitet werden, der sowohl technisch als auch auslastungsbedingt am ehesten in der Lage ist, den Auftrag zu bearbeiten. Diese Funktion kann durch eine Datenbank umgesetzt werden, in der die Fähigkeiten, den Kenntnis- und Ausbildungsstand der Angestellten der Druckerei gespeichert sind. Diese Datenbank kann mit einer Queue-Management-Software gekoppelt werden, welche die Auslastung der einzelnen Bearbeitungsstationen 116 ausgleicht.

In der Vorbereitungsphase 204 können die Dokumente z. B. zu einem Buch zusammengefasst, mit Anmerkungen versehen, editiert und ausgeschossen werden. Es können auch andere Seiteneigenschaften hinzugefügt werden. Sobald die Dokumente druckreif sind, treten sie in das Produktionsstadium 206 ein, in dem die vorbereiteten Dokumente zusammen mit den Produktionsanweisungen (aus den Tickets) an den Druckserver oder mittels einer Einrichtung zum Download von Dateien, z. B. das Anwenderprogramm "Print File Downloader™" der Firma Heidelberg Digital, L.L.C, direkt an das Hochleistungs-Ausgabegerät 122 weitergeleitet werden. Dieser Bediener-Funktionalitäts-Workflow 200 kann als eine Kombination aus Hardware, Software und manuellen Schritten umgesetzt werden und kann eine oder mehrere der bereits im Zusammenhang mit dem Druckproduktions-Workflow erläuterten Komponenten einschließen.

In den bevorzugten Ausführungsformen ist der Funktionalitäts-Workflow vorzugsweise als ein Workflow-Management-Softwareprogramm mit Schnittstelle ausgebildet, das auf der Bearbeitungsstation 116 abläuft. Eine bevorzugte Workflow-Management-Software ist z. B. eine objektorientierte grafische Benutzerschnittstelle (graphical user interface, GUI), bei der die Steuerung der Workflow-Funktionalität in eine einzige Schnittstelle integriert ist. Während die visuelle und operationelle Form der Management Software vorzugsweise objektorientiert ist, kann die Umsetzung der Software durch eine objektorientierte Programmiersprache oder auch durch eine nicht-objektorientierte Programmiersprache erfolgen, wie sie dem Stand der Technik bekannt sind.

In der GUI werden Dokumente, Tickets und andere Einheiten und Abläufe (allgemein "Objekte") visuell auf dem Display der Bearbeitungsstation 116 dargestellt, z. B. durch Icons, Baumstrukturen und Pull-down-Menüs und können mittels bekannter Vorrichtungen und Verfahren wie eine Maus oder ein Trackball interaktiv angesteuert werden, indem ein visuell dargestelltes Zeigeelement gesteuert wird, um die dargestellten Elemente anzuklicken, auszuwählen, zu verschieben und einzufügen ("drag and drop"). Eine Manipulation der visuellen Darstellungen führt zu einer Manipulation der zugrunde liegenden Objekte (Dokumente, Tickets, andere Einheiten und Abläufe). Außerdem ermöglicht die GUI die Erstellung und Veränderung von Beziehungen und Verknüpfungen zwischen den verschiedenen Objekten sowie eine visuelle Darstellung dieser Beziehungen und Verknüpfungen z. B. anhand eines hierarchischen Ansatzes mittels einer Baumstruktur, einer Dateiordner-Struktur oder einer anderen Form von visueller Darstellung. GUIs sind bekannt; es gibt viele Softwareentwicklungs-Pakete, die zur Entwicklung einer GUI geeignet sind, darunter z. B. "Open Software Development Kit" der Firma Microsoft.

Außerdem verwendet die bevorzugte GUI einen dokumentzentrierten Ansatz, der ein zentralisiertes Ansichtsfenster vorsieht, in dem die gerade bearbeiteten Dokumente angezeigt werden. In der bevorzugten Ausgestaltung wird die Dokumenten-Ansichtsfunktion durch das Adobe Acrobat Softwareprogramm der Firma Adobe Systems, Inc., ausgeübt.

Wie bereits erwähnt, integriert die Workflow-Management-Software Anwendungen, welche die verschiedenen Stufen des Druckproduktions-Workflows 100 umsetzen, steuern oder überwachen. Diese Anwendungen umfassen die Dokumenteneingabe aus verschiedenen Quellen, das Zusammenfügen von Dokumenten, um z. B. Bücher zu erstellen oder zu verändern, das Editieren von Dokumenten, das Einfügen von Anmerkungen, sowie Zugriff auf die Dokumentenbibliothek auf dem Netzwerk-Server 118, das Einstellen und Verändern von Seiteneigenschaften, das Erstellen und Verändern von Job Tickets und das Drucken.

Die Workflow-Management-Software ist in der Lage, Eingaben von verschiedenen Quellen zu akzeptieren. Diese Quellen umfassen Dokumente in Papierform, die mittels eines Scanners eingelesen werden, Dokumente in den speziellen Anwenderformaten, z. B. Formate des Microsoft-Office™-Pakets oder Formate von Desktop-Publishing-Anwendungen wie z. B. QuarkXpress™ von Quark Inc. und FrameMaker™ von Adobe Systems, Inc. Außerdem kann die Software mit TIFF-Dateien sowie mit Dateien in druckfertigen Format wie PDF-Dateien, PS-Dateien, PCL-Dateien umgehen. Damit Dokumente in Papierform mittels eines Scanners eingelesen werden können, unterstützt die Software Scanner-Schnittstellen gemäß dem Industriestandard, z. B. TWAIN von TWAIN in Boulder Creek, Kalifornien und die von Pixel Translations, Inc. in San Jose, Kalifornien entwickelte Image and Scanner Interface Specification (ISIS), die auch in der Beschreibung des American National Standards Institute ANSI/AIIM MS61-1996 definiert ist. Mittels dieser Standard-Schnittstellen empfängt die Workflow-Management-Software die gescannten Bilddaten direkt im druckfertigen Format. Als Scanner mit der bevorzugten Workflow-Software kann z. B. ein Imagedirect™ Scanner von Heidelberg Digital, L.L.C. verwendet werden.

Die bevorzugte Workflow-Management-Software unterstützt ferner eine ODMA als Schnittstelle zu Dokumentbibliotheken. Außerdem erweitert die vorgesehene ODMA die Funktionalität der Dokumentbibliothek auf die Handhabung, Speicherung und Archivierung von (nachfolgend beschriebenen) zusammengesetzten Dokumenten und Tickets. Dies ermöglicht die Erstellung von Bibliotheken von standardisierten Tickets oder erleichtert Aktualisierungen und erneutes Drucken von zusammengesetzten Dokumenten wie z. B. Bücher.

Sobald die Dokumente in der Workflow-Management-Software gespeichert sind, können mittels bestimmter Tools zusätzliche Leistungen zur Verbesserung der Dokumente und zu deren Vorbereitung für die Produktion vorgenommen werden. Als Umbruch bezeichnet man den Prozess des Anordnens oder Umordnens von Seiten oder das Einfügen oder Entfernen von Seiten. Der Umbruch umfasst auch das Ausschießen, wobei die Position von Seiten fixiert wird und z. B. festgelegt wird, dass die erste Seite eines Kapitels auf der Vorderseite einer Seite liegen muss. Die Workflow-Management-Software ermöglicht Ausschneide-, Kopier-, Einfüge-, Verschiebe-Aktionen auf einer Seite oder auf mehreren Seiten. Diese Funktionalität wird vorzugsweise mittels Pull-down-Menüs, eingeblendeten Dialogfenstern, Optionsleisten oder Symbole erreicht, wie sie an der graphischen Benutzerschnittstelle vorgesehen sind. Außerdem werden die Ergebnisse der Aktionen in einer visuellen Darstellung des Dokuments im zentralisierten Dokument-Ansichtsfenster auf dem Display der Bearbeitungsstation 116 angezeigt.

Ferner unterstützt die Workflow-Management-Software das Editieren des Dokuments sowie das Einfügen von Anmerkungen. Es sind Tools vorgesehen, die das Editieren von Bildbereichen einer eingescannten Seite ermöglichen, insbesondere das Löschen innerhalb und außerhalb eines Bereichs, das Ausschneiden, Verschieben, Kopieren und Einfügen von Bereichen sowie punktweises Löschen. Weiterhin sind Tools für das Editieren von Seiten vorgesehen, die Editier-Aktionen wie das Maskieren von Bereichen oder das Verkleinern auf einer Seite oder auf mehreren Seiten ermöglicht. Es sind ebenfalls Tools für das Einfügen von alphanumerischen oder grafischen Anmerkungen in Dokumente, z. B. Seitennummerierung oder Bates-Nummern, vorgesehen. Darüber hinaus ist es auch möglich, Bilder in den Hintergrund zu stellen und das Dokument so zu sagen mit einem "Wasserzeichen" zu versehen. Die Anmerkungen können in einen beliebigen Abschnitt auf einer Seite oder auf mehreren Seiten eingefügt werden. Bei alphanumerischen Anmerkungen ist die Schriftgröße und -art wählbar. In jedem Fall werden die Ergebnisse der jeweiligen Aktion in einer visuellen Darstellung des Dokuments im zentralisierten Dokument-Ansichtsfenster des Displays der Bearbeitungsstation 116 angezeigt. In den bevorzugten Ausführungsformen können die Anmerkungen oder Editierungen erzeugt oder verändert werden, indem auf visuelle Darstellungen des Dokuments und/oder bestimmter Seiten des Dokuments gezeigt wird, die gewählte Darstellung verschoben oder eingefügt oder angeklickt wird und/oder eine Option aus einem Menü gewählt wird, wobei durch die Auswahl einer bestimmten Option die zugeordnete Editierung oder Anmerkung auf die ausgewählten Abschnitte des Dokuments angewandt wird. Alternativ kann eine Optionsleiste dargestellt werden, aus der der Benutzer eine Option auswählt, um diese Option auf die ausgewählten Abschnitte des Dokuments anzuwenden. Schließlich kann die Schnittstelle noch die Möglichkeit vorsehen, dass ein Dialogfenster oder eine sonstige visuelle Steuerung zur Eingabe von Steuerungswerten für das Editieren oder das Einfügen von Anmerkungen, z. B. die Anfangsnummer der Bates-Nummern, erscheint.

Die Workflow-Management-Software bietet weiterhin vorzugsweise die Möglichkeit, zusammengesetzte Dokumente zu bearbeiten. Als zusammengesetzte Dokumente werden gemäß der vorliegenden Anmeldung Dokumente bezeichnet, die aus mindestens einem anderen Dokument bestehen wie z. B. Bücher, die aus mehreren Kapiteln bestehen, oder Sammlungen von Auszügen aus mindestens einer Quelle. Zusammengesetzte Dokumente nutzen den Vorteil, den der objektorientierte Ansatz der Workflow-Management-Software bietet. Ein zusammengesetztes Dokument ist eine Sammlung von einem Dokument oder mehreren Dokumenten, die in einer bestimmten Reihenfolge geordnet sind, wie z. B. die Kapitel eines Buchs. Weiterhin enthält ein zusammengesetztes Dokument ein automatisch erzeugtes zusammengefügtes Dokument, das ein einziges Dokument ist, welches die gesamten zusammengestellten Dokumente enthält. Es sind Tools vorgesehen, die eine einfache Handhabung der einzelnen Dokumente eines zusammengesetzten Dokuments ermöglichen, d. h. die das Zusammenfügen und Aktualisieren der Dokumente zum zusammengesetzten Dokument sowie eine selektive Manipulation, z. B. auch das selektive Ausdrucken der einzelnen Dokumente des zusammengesetzten Dokuments ermöglichen. Weiterhin können Tools vorgesehen sein, die den Inhalt der einzelnen Dokumente des zusammengesetzten Dokuments interpretieren und automatisch ein Inhaltsverzeichnis des zusammengesetzten Gesamtdokuments generieren können. Ansonsten verhält sich ein zusammengesetztes Dokument wie ein einfaches Dokument und kann als solches editiert und mit Anmerkungen versehen oder auf andere Weise bearbeitet werden. Ein zusammengesetztes Dokument kann ferner mit Tickets verknüpft sein. Außerdem kann ein zusammengesetztes Dokument aus mehreren anderen zusammengesetzten Dokumenten bestehen, wie es z. B. bei einem Buch in mehreren Bänden der Fall ist. Die einzelnen Dokumente und zusammengesetzten Dokumente, die das zusammengesetzte Dokument bilden, behalten ferner ihre unabhängige Existenz und können einzeln unabhängig vom zusammengesetzten Dokument und zusammen mit anderen zusammengesetzten Dokumenten editiert oder gedruckt werden, wobei die Editierungen in einem bestimmten Dokument innerhalb eines zusammengesetzten Dokuments automatisch oder von Hand ausgeführt werden können. Die Workflow-Management-Software zeigt ferner eine visuelle Darstellung, z. B. eine hierarchische Struktur oder ein Baumdiagramm, in dem das zusammengesetzte Dokument sowie alle diesem zugeordneten Dokumente und Tickets enthalten sind. In den bevorzugten Ausführungsformen können zusammengesetzte Dokumente erzeugt und verändert werden, indem auf die visuelle Darstellung eines Dokuments oder mehrerer Dokumente und/oder eine visuelle Darstellung eines zusammengesetzten Dokuments gezeigt wird und dieses Dokument bzw. diese Dokumente ausgewählt, verschoben, eingefügt und/oder angeklickt und/oder eine Option aus einem Optionswahlmenü gewählt wird, wobei durch die Wahl einer bestimmten Option die dieser Option zugeordnete Aktion auf die gewählten Dokumente oder zusammengesetzten Dokumente angewandt wird. Alternativ kann eine Optionsleiste dargestellt werden, aus welcher der Benutzer eine Option auswählt, um diese auf die ausgewählten zusammengesetzten Dokumente anzuwenden. Außerdem kann die Schnittstelle noch die Möglichkeit vorsehen, dass ein Dialogfenster oder eine sonstige visuelle Steuerung zur Eingabe von Steuerungswerten für das zusammengesetzte Dokument, z. B. von Einstellungen für die Seitenränder, erscheint. Ein Benutzer kann z. B. ein Dokument oder mehrere Dokumente auswählen und eine Option "zusammengesetztes Dokument erstellen"-Option aus einem Pull-down-Menü wählen. Die Workflow-Management-Software erzeugt daraufhin eine visuelle Darstellung des zusammengesetzten Dokuments auf dem Display, in der die Verknüpfung des zusammengesetzten Dokuments mit den gewählten Dokumenten gezeigt wird. Alternativ kann zunächst eine visuelle Darstellung eines zusammengesetzten Dokuments erzeugt werden und anschließend die visuellen Darstellungen eines Dokuments oder mehrerer Dokumente ausgewählt und auf die visuelle Darstellung des zusammengesetzten Dokuments gezogen werden ("Drag and Drop"). Die Workflow-Management-Software erzeugt schließlich die nötige logische Verknüpfung der Daten, die für die visuellen Darstellungen stehen.

Die Workflow-Management-Software wird außerdem vorzugsweise mit Daten zu den Eigenschaften der verschiedenen in der Druckerei befindlichen oder auf andere Weise verfügbaren Ausgabegeräten 122 oder anderen Bearbeitungseinrichtungen, z. B. manuell oder automatisch betriebene Weiterverarbeitungseinrichtungen, programmiert. Die Software beinhaltet Tools zur Einstellung der Seiteneigenschaften und der Formatierung, die durch die spezifischen Eigenschaften ermöglicht werden. Diese Eigenschaften betreffen z. B. das einseitige oder beidseitige Bedrucken des Materials (Simplex- oder Duplex-Druck), die Binde-Optionen wie Heften oder Lochen und die Steuerungseinstellung für das Einfügen von Registerblättern oder anderen Ordnungselementen. Die bevorzugten Ausführungsformen unterstützen vorzugsweise alle Eigenschaften der Digimaster™-Digitaldrucker von Heidelberg Digital, L.L.C. In den bevorzugten Ausführungsformen können diese Seiteneigenschaften durch die Auswahl einer visuellen Darstellung einer Seite oder mehrerer Seiten oder das Zeigen auf eine visuelle Darstellung einer Seite oder mehrerer Seiten und die Auswahl einer Option aus einem Optionsmenü eingestellt werden, wodurch die gewählte Option den gewählten Seiten zugewiesen wird. Alternativ kann eine Optionsleiste dargestellt sein, aus der der Bediener eine Option wählt, um sie auf die ausgewählten Seiten anzuwenden. Außerdem kann die Schnittstelle noch die Möglichkeit vorsehen, dass ein Dialogfenster oder eine sonstige visuelle Steuerung zur Eingabe von Steuerungswerten für die jeweilige Eigenschaft erscheint, z. B. für die Art der Registerblätter. Durch die Einstellung von Seiteneigenschaften für bestimmte Seiten werden Anweisungen an das Ausgabegerät 122 kodiert, damit das Ausgabegerät 122 diese Eigenschaften in der druckfertig formatierten Datei implementiert. Wenn das Ausgabegerät 122 die Datei zum Drucken erhält, interpretiert es zunächst diese Anweisungen, um die gewünschte Eigenschaft zu implementieren. Enthält ein Dokument Seiteneigenschaften, mit dem das aktuelle Ausgabegerät 122 nicht umgehen kann, so kann das Ausgabegerät 122 ein Signal aussenden, das dem Bediener anzeigt, dass eine manuelle Intervention nötig ist, und den Bediener durch die geeigneten Schritte zur Implementierung der gewünschten Seiteneigenschaft und zur Fertigstellung des Druckauftrags leiten. Dies umfasst z. B. eine Anweisung an den Bediener, halbfertige Dokumente zu entnehmen und sie zur Fertigstellung in eine Bindemaschine einzulegen, oder einen bestimmten Bedruckstoffvorrat oder Registervorrat im Gerät 122 aufzufüllen.

Weiterhin sind in der Workflow-Management-Software Tools vorgesehen, die elektronische Tickets unterstützen, die Spezifizierungen bezüglich der Anweisungen an das Ausgabegerät und Parameter sowie weitere automatische oder manuelle Bearbeitungsschritte, die für das gesamte Dokument gelten (z. B. die Auftragshöhe oder sonstige globale Dokumentattribute) enthalten. Dies beinhaltet Angaben zur Art des zu verwendenden Bedruckstoffs oder der zu verwendenden Farben sowie das Bindeverfahren wie Heften etc. Tickets, die auch als Druckanweisungen oder Job Tickets bezeichnet werden, können, wie bereits erwähnt, unabhängig von den (zusammengesetzten) Dokumenten existieren. Die Workflow-Management-Software stellt sie unabhängig von diesen visuell auf dem Display dar. Es sind auch Tools zur Manipulation von Tickets vorgesehen, mittels derer diese gespeichert und mit Dokumenten oder zusammengesetzten Dokumenten verknüpft oder zugeordnet oder editiert werden können. In den bevorzugten Ausführungsformen können Tickets ebenso wie Dokumente verändert werden, indem man auf sie zeigt, sie anklickt, auswählt, verschiebt und einfügt. Ein Ticket kann z. B. mit einem Dokument verknüpft werden, indem das Ticket ausgewählt wird und auf ein bestimmtes Dokument gezogen wird. Im Anschluss daran wird die Verknüpfung durch die Workflow-Management-Software vorzugsweise visuell dargestellt, indem das Ticket unter der Hierarchie des Dokuments erscheint. Nach der Verknüpfung gelten die durch das Ticket spezifizierten Optionen für das zugeordnete Dokument oder zusammengesetzte Dokument. Die durch das Ticket spezifizierten Optionen können durch Auswahl des Tickets eingestellt werden, wodurch ein Dialogfenster oder ein Pull-down-Optionsmenü erscheint, das die verfügbaren Optionen enthält und eine Veränderung der Optionswerte ermöglicht. Die einem Dokument zugeordneten Tickets können zusammen mit dem Dokument manipuliert werden. Beim Speichern eines Dokuments werden z. B. alle zugeordneten Tickets mitgespeichert. Außerdem ist die Workflow-Management-Software in der Lage, Bibliotheken standardisierter Tickets zu erzeugen, die z. B. zur Standardisierung von Prozessen in verschiedenen Filialen einer Druckerei dienen können.

Außerdem bietet die Workflow-Management-Software Tools zum Weiterleiten der vorbereiteten Dokumente mit deren zugeordneten Tickets an das Ausgabegerät für den abschließenden Druckvorgang. In den bevorzugten Ausführungsformen können Dokumente oder zusammengesetzte Dokumente durch Auswahl, Anklicken und Ziehen der visuellen Darstellung des Dokuments oder zusammengesetzten Dokuments auf die visuelle Darstellung des Druckservers oder des Ausgabegeräts übermittelt werden. Alternativ kann eine gewünschte Option aus einem Pull-down-Menü, einem Dialogfenster oder einer Symbolleiste ausgewählt werden. Die Workflow-Management-Software unterstützt Standard-Schnittstellen und -Protokolle für Ausgabegeräte und Druckserver. Außerdem sind Tools zur Auswahl und Überwachung mehrerer Ausgabegeräte vorgesehen. Diese Tools liefern dem Bediener eine visuelle Rückmeldung bezüglich des Status des Ausgabegeräts, z. B. bezüglich der aktuellen Auftrags-Warteschlange.

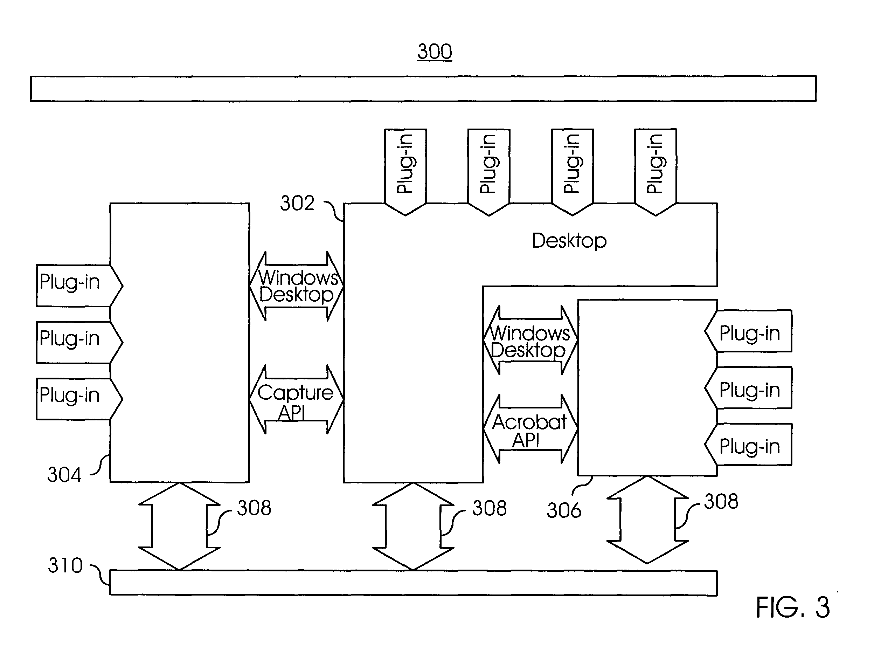

Fig. 3 zeigt ein Blockdiagramm einer bevorzugten Software-Architektur 300 einer Workflow-Management-Anwendung für den Auflagendruck. Die Architektur 300 umfasst eine Desktop-Komponente 302, eine Workflow-Komponente 304 und eine Ansichts-Komponente 306. Alle Komponenten arbeiten über Anwenderprogramm-Schnittstellen 308 der Bearbeitungsstation 116, bei der es sich, wie bereits erwähnt, vorzugsweise um eine auf Microsoft Windows™ (95, 98, 2000 etc.) oder Windows NT™ basierende Plattform 310 handelt.

Zentrales Element der Architektur 300 ist die Desktop-Komponente bzw. der Desktop 302. Dieser vereint die Anzeige 306 und die Workflow-Komponente 304. Der Desktop 302 implementiert die integrierte Schnittstelle (GUI) und bietet alle bereits beschriebenen Workflow-Funktionalitäten und visuellen Darstellungen, die auf dem Display der Bearbeitungsstation 116 angezeigt werden sollen. Der Desktop 302 ist vorzugsweise als eine Plug-in-Architektur ausgebildet, durch die Erweiterungen und Aktualisierungen leicht und effektiv durchgeführt werden können, ohne dass der Haupt-Programmcode neu kompiliert werden muss. Der Haupt-Programmcode ist so ausgelegt, dass er bei jeder Ausführung des Codes nach Programmerweiterungen (Plug-ins) sucht. Ist ein oder sind mehrere Plug-ins vorhanden, so werden deren Funktionalitäten über eine Plug-in-Schnittstelle in den Haupt-Programmcode aufgenommen. Ein Plug-in kann eine neue Eigenschaft oder Funktion enthalten oder kann eine bereits vorhandene Eigenschaft oder Funktion modifizieren. Aufgrund der Tatsache, dass der Haupt-Programmcode nicht neu kompiliert werden muss, können Programmerweiterungen problemlos an die Nutzer verteilt werden. Die Nutzer können ihre eigene Software einfach aktualisieren, indem der Plug-in an der korrekten Stelle in ihrem Computersystem eingefügt wird. Jedem Nutzer steht so bei jedem Hochfahren seines Desktops 302 ein voll funktionsfähiger Desktop zur Verfügung, der alte und neue Funktionalitäten vereinigt. In den bevorzugten Ausführungsformen ist der Desktop 302 vorzugsweise mit einer objektorientierten Programmiersprache programmiert, die den objektorientierten Ansatz der GUI implementiert. Beispiele für objektorientierte Programmiersprachen sind C++ oder Java. Es ist ebenfalls möglich, das Open Software Development Kit von Microsoft einzusetzen. Alternativ kann auch eine nicht objektorientierte Programmiersprache verwendet werden.

Die Anzeigekomponente oder Anzeige 306 bietet die Funktionalität des Anzeigens von Dokumenten und von Seiten von Dokumenten und arbeitet vorzugsweise mit Dokumenten in druckfertigem Format. Außerdem bietet die Anzeige 306 die Möglichkeit, auf der Ebene der Seiten Zusammenfügungen und Editierungen vorzunehmen sowie Anmerkungen einzufügen. Es ist auch möglich, die Seiteneigenschaften einzelner Seiten oder Seitengruppen zu ändern. Die Anzeige 306 basiert vorzugsweise auf Adobe Acrobat (Version 4.05) von Adobe Systems, Inc., das mit Dateien im druckfertigen PDF arbeitet. Die Anzeige ist mit dem Desktop über Standard-Schnittstellen von Microsoft Windows und die Acrobat-Anwenderprogramm-Schnittstelle, wie sie im Adobe Software Development Kit von Adobe Systems definiert ist, verbunden. Die Anzeigen 306 ist ebenfalls vorzugsweise als Plug-in-Architektur ausgebildet, die zusätzliche Erweiterungen ermöglicht. Derartige Erweiterungs-Plug-ins können z. B. verwendet werden, um eine oder mehrere der bereits beschriebenen Umbruch-, Editier- oder Anmerkungsfunktionen auf Seitenebene hinzuzufügen. Diese Plug-ins umfassen z. B. Quite Imposing Plus™ von Quite Inc. in London, UK, das zur Durchführung der verschiedenen bereits beschriebenen Ausschießfunktionen geeignet ist, und StampPDF von Digital Applications, Inc. in Lansdowne, Pennsylvania, das zur Durchführung der verschiedenen bereits beschriebenen Anmerkungsfunktionen dient. Alternativ können auch Anzeigen 306 verwendet werden, die mit nicht-druckfertigen Dateiformaten wie z. B. TIFF-Dateien arbeiten. Derartige Anzeigen haben jedoch aufgrund der unflexiblen Eigenschaften des TIFF-Dateiformats eingeschränkte Eigenschaften und begrenzte Möglichkeiten bezüglich des Seitenumbruchs, insbesondere bezogen auf Ausschieß-, Editier- und Anmerkungsfunktionen.

Die Anzeige 306 ist mit dem Desktop 302 verbunden, um übergreifende Funktionen zu ermöglichen und den Workflow zu vereinfachen. Insbesondere werden auf dem Desktop 302 Objekte visuell dargestellt, die in der Anzeige 306 dargestellt sind. Außerdem werden die Auswahl und Veränderung von Dokumenten, Tickets oder anderen Objekten durch den Bediener am Desktop 302 auf geeignete Weise an die Anzeige 306 übermittelt und durch diese angezeigt. Wenn z. B. ein Nutzer ein Dokument auf dem Desktop 302 zur Ansicht auswählt, wird eine diesbezügliche Information an die Anzeige 306 gesandt, damit das gewählte Dokument aufgerufen und angezeigt wird. Der Desktop 302 ermöglicht ferner eine Datenübertragung zwischen den in der Anzeige 306 dargestellten Dokumenten. Ein Nutzer kann z. B. eine Seite eines in der Anzeige 306 dargestellten Dokuments wählen, einen Kopierbefehl eingeben und schließlich ein weiteres Dokument vom Desktop 302 wählen, um die kopierte Seite einzufügen. Der Desktop 302 erleichtert diese "Clipboard"-Funktionalität zwischen Dokumenten. Ferner können Editierungen, Anmerkungen oder das Hinzufügen weiterer Seiteneigenschaften mittels der Funktionalitäten der Anzeige 306 das Weiterleiten von Daten an den Desktop 302 veranlassen, so dass diese Editierungen, Anmerkungen oder sonstigen Seiteneigenschaften zusammen mit dem Dokument, zu dem sie gehören, gespeichert und visuell dargestellt werden können. Das Einfügen einer Seiteneigenschaft in ein Dokument (z. B. das Einstellen von beidseitigem oder einseitigem Druck) kann z. B. die Erzeugung eines Seitenobjekts, d. h. einer visuellen Darstellung des Vorhandenseins einer Seiteneigenschaft, und die Zuordnung des Seitenobjekts zu dem Dokumentobjekt, d. h. der visuellen Darstellung des Dokuments auf dem Desktop 302, bewirken. Die Zuordnung kann in Form einer hierarchischen Struktur auf dem Desktop 302, z. B. einer Baumstruktur, erfolgen.

Die Workflow-Komponente 304 ist ebenfalls mit dem Desktop 302 verbunden und bietet Tools und Funktionalitäten zur Handhabung des Druckproduktions-Workflows bestimmter Dokumente und zusammengesetzter Dokumente. Die Workflow-Komponente 304 ermöglicht die Erzeugung und/oder Definition eines Workflow-Objekts, das auf dem Desktop 302 visuell dargestellt und mittels der Funktionalitäten des Desktops 302 auf die bereits beschriebene Weise wie andere Objekte, z. B. Dokumente, zusammengesetzte Dokumente oder Tickets, verändert werden kann. Das Workflow-Objekt kann in der Weise definiert sein, dass es die Verfahrensschritte enthält, die ein Dokument bis zur abschließenden Produktion durchlaufen muss. Wenn ein Workflow-Objekt einem Dokument oder einem zusammengesetzten Dokument zugeordnet wird, z. B. mittels "drag and drop" über die GUI des Desktops 302, so werden die definierten Verfahrensschritte ausgeführt. Einer der Verfahrensschritte könnte z. B. die Erzeugung eines Tickets vorsehen. Wenn ein Dokument, dem noch kein Ticket zugeordnet ist, auf das Workflow-Objekt gezogen wird, so wird der Bediener durch einen Ablauf geführt, durch den ein Ticket erzeugt und dem Dokument zugeordnet wird. Workflow-Objekte können so definiert sein, dass sie den Bediener durch eine Reihe von Verfahrensschritten führen oder diese Verfahrensschritte automatisch ausführen. Sie können zur Standardisierung und Automatisierung von Routineabläufen in der Druckerei und zur Eliminierung von inkonsistenten und ineffizienten Abläufen eingesetzt werden. Workflow-Objekte können unabhängig von Dokumenten, zusammengesetzten Dokumenten oder Tickets existieren oder mit diesen verknüpft sein. Derartige Verknüpfungen können, wie bereits beschrieben, in einer hierarchischen Struktur visuell dargestellt werden.

Die Workflow-Komponente 304 ist vorzugsweise ebenfalls als eine Plug-in-Architektur ausgebildet, um Erweiterungen zu erleichtern. Eine beispielhafte Workflow-Komponente 304, die in den offenbarten Ausführungsformen eingesetzt werden kann, ist das Adobe Capture Programm (Version 3.0) von Adobe Systems™, Inc. In einer alternativen Ausführungsform ist die Workflow-Komponente 304 eine eigenständige Workflow-Mangement-Schnittstelle, die über eine eigene GUI verfügt, mittels derer Workflow-Objekte und deren Beziehung zu Dokumenten, zusammengesetzten Dokumenten und Tickets kontrolliert und verändert werden können.

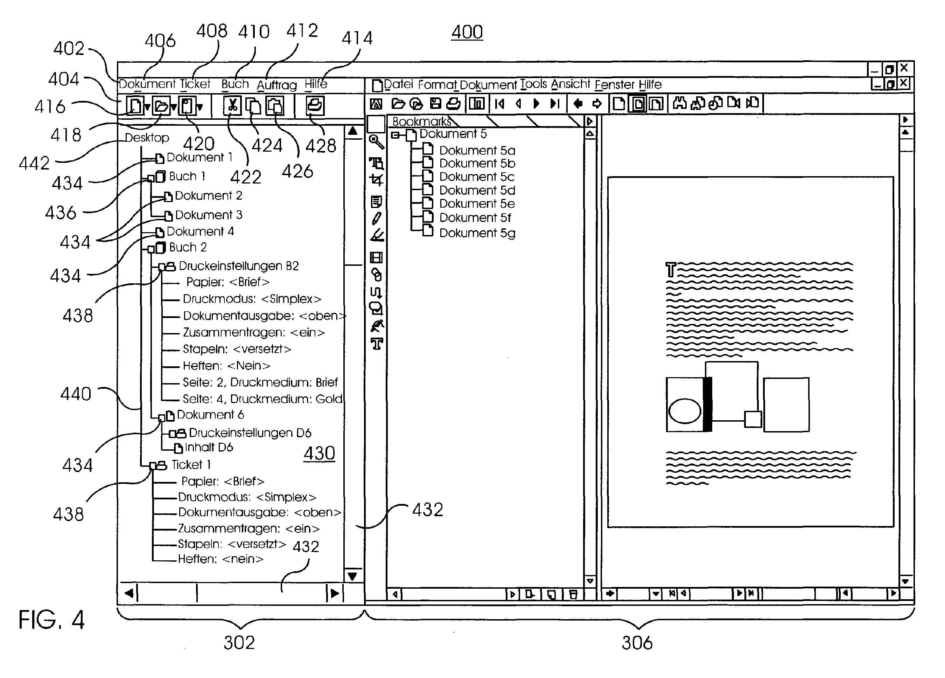

Fig. 4 zeigt eine bevorzugte Ausführungsform eines Displays 400 einer GUI. Das Display 400 umfasst eine Anzeige 306 und eine Desktopkomponente 302. Die Desktopkomponente 302 umfasst Menüs 402 und Symbolleisten 404, die dem Nutzer eine visuelle Handhabung und Veränderung der verschiedenen bereits beschriebenen Objekte ermöglicht. Die Menüs 402 umfassen ein Dokumentmenü 406, ein Ticketmenü 408, ein Buchmenü 410, ein Auftragsmenü 412 und ein Hilfemenü 414. Die Symbolleiste 404 enthält eine Symbol "neues Objekt" 416, ein Symbol "Objekt öffnen" 418 und ein Symbol "Zugriff auf Bibliothek" 420 sowie ein Symbol "Ausschneiden" 422, ein Symbol "Kopieren" 424, ein Symbol "Einfügen" 426 und ein Symbol "Drucken" 428. Graphische Benutzerschnittstellen (GUI) sind bekannt, und es gibt viele Arten der Umsetzung einer GUI. Es können alle Arten von graphischen Eingabevorrichtungen eingesetzt werden, z. B. auch auf dem Bildschirm bewegbare Pull-down-Menüs (sogenannte Tear-Off Menüs), bewegbare Symbolleisten, Dialogfenster, Tastaturbefehle und Mausklicks sowie alle anderen physischen Eingabegeräte.

Das Dokumentmenü 406 bietet Optionen zur Erzeugung und Veränderung von Dokumentobjekten innerhalb der Workflow-Software-Umgebung. Diese Optionen umfassen das Erzeugen, Öffnen und Schließen von Dokumenten, das Öffnen einer ODMA-Schnittstelle zu einer Dokumentenbibliothek, das Anzeigen eines Dokuments in der Anzeige, sowie das Verschieben, Drucken und Löschen eines Dokuments. Das Ticketmenü 408 bietet die Möglichkeit, eine Auftragsbeschreibung (Job Ticket) zu erzeugen oder zu verändern. Hierzu gehört das Erzeugen eines Tickets, der Zugriff auf eine Ticket-Datenbank, das Darstellen und Einstellen von Eigenschaften und Attributen, die ein Ticket steuert, das Verschieben und Löschen von Tickets und die Verknüpfung eines Tickets mit einem Dokument oder Buch. Das Buchmenü 410 ermöglicht das Erstellen und Verändern von zusammengesetzten Dokumentobjekten. Dies beinhaltet das Erzeugen eines Buchs, das Zuordnen von Dokumenten zu diesem Buch, das Entfernen von Dokumenten aus dem Buch, das Zuordnen eines Tickets zu einem Buch oder einem Dokument in einem Buch, das Entfernen eines Tickets, das Erzeugen des fertiggestellten Dokuments aus den zugeordneten Dokumentkomponenten, das Erstellen eines Inhaltsverzeichnisses für das Buch, das Aktualisieren des zusammengefügten Dokuments durch Aktualisierungen der einzelnen Dokumentkomponenten, das Drucken des Buchs oder das selektive Drucken einzelner Teile des Buchs. Das Auftragsmenü 412 ermöglicht das Erstellen und Verändern von Aufträgen, die, wie bereits erläutert, aus Dokumenten oder zusammengesetzten Dokumenten und den zugeordneten Job Tickets bestehen. Diese Optionen umfassen die Erzeugung, das Editieren, Verschieben, Drucken und Löschen eines Auftrags. Das Hilfemenü 414 bietet dem Nutzer Unterstützung im Umgang mit der Software.

Die Funktionalität des Symbols "neues Objekt" 416 dient zur Erzeugung eines neuen Dokumentobjekts, eines Ticketobjekts, oder eines Objekts für ein zusammengesetztes Dokument oder eines Auftragsobjekts. Durch die Wahl dieses Symbols erscheint vorzugsweise ein Dialogfenster, das dem Nutzer die verschiedenen mit dieser Option zusammenhängenden Optionen anzeigt. Das Symbol "Objekt öffnen" 418 hat die Funktionalität, ein bereits vorhandenes Dokument oder zusammengesetztes Dokument, ein Ticket, einen Auftrag oder eine Dokumentenbibliothek zu öffnen. Durch die Wahl dieses Symbols erscheint vorzugsweise ein Dialogfenster, das dem Nutzer das Auffinden von Dateien und den Umgang mit dem Dateisystem der Bearbeitungsstation 116 oder des Netzwerk-Servers 118 ermöglicht. Das Symbol "Ausschneiden" 422, "Kopieren" 424 und "Einfügen" 426 bieten die Funktionalität, ausgewählte visuell auf dem Desktop 302 dargestellte Objekte auf bekannte Weise zu verschieben und/oder zu vervielfältigen. Diese Symbole sind mit einem Zwischenspeicher verbunden, der auch als "Clipboard" bezeichnet wird und zur Umsetzung der Ausschneide-, Kopier- und Einfügefunktion dient. Das Symbol "Drucken" 428 setzt die Funktionalität um, ein gewähltes Dokument oder zusammengesetztes Dokument an das Ausgabegerät zu leiten. Durch die Wahl dieses Symbols erscheint vorzugsweise ein Dialogfenster, das dem Nutzer als Schnittstelle zwischen dem Desktop 302 und dem Druckserver 120 und den Ausgabegeräten 122 dient. Diese Schnittstelle kann Änderungen an den Ausgabeoptionen in letzter Minute unmittelbar vor der abschließenden Produktion ermöglichen. Das Symbol ruft vorzugsweise die Print File Downloader™ Anwendung von Heidelberg Digital, L.L.C. auf. Die Optionen und Funktionen können selbstverständlich als Symbole oder Menüoptionen ausgebildet sein - die bevorzugte Workflow-Management-Software unterstützt alle Möglichkeiten. Bevorzugt wird jedoch, dass die Symbole, Menüs etc. ergonomisch und intuitiv angeordnet sind, um die zur Einarbeitung benötigte Zeit sowie die Fehlermöglichkeiten zu reduzieren.

Die Desktopkomponente 302 umfasst ferner ein hierarchisches Display-Fenster 430. In Fig. 4 ist ein Beispiel eines hierarchischen Display-Fensters 430 gezeigt, in dem eine repräsentative Auswahl von Objekten und Zuordnungen dargestellt ist. Dieses Fenster 430 enthält bekannte Standardelemente zur Steuerung des Fensters wie z. B. Scroll-Leisten 432. Außerdem beinhaltet das Fenster 430 eine Darstellung einer Hierarchie, unter der alle dargestellten Objekte angeordnet sind. Das Beispielfenster 430 umfasst ein Desktop-Objekt 442, das für die zugrundeliegende Objektdatenbank steht, sowie die Dokumentobjekte 434, die Buchobjekte 436 und Ticketobjekte 438, die alle der Baumstruktur 440 zugeordnet sind. Die Baumstruktur steht für die zugrundeliegenden logischen Verknüpfungen zwischen den Daten, für die die Objekte 434, 436 und 438 stehen. Das mit "Buch 1" bezeichnete Buchobjekt 436 enthält die mit "Dokument 2" und "Dokument 3" bezeichneten Dokumentobjekte 434. Das mit "Buch 2" bezeichnete Buchobjekt 436 enthält ein mit "Druckeinstellungen B2" bezeichnetes Ticketobjekt 438 und ein als "Dokument 6" bezeichnetes Dokumentobjekt 434, das wiederum selbst ein mit "Druckeinstellungen D6" bezeichnetes Ticketobjekt 438 beinhaltet. Das als "Dokument 1" bezeichnete Dokument 434 ist mit keinem anderen Objekt verknüpft. Die Objekte können auf- und zugeklappt werden, um deren Attribute oder die in ihrer Hierarchie weiter unten stehenden Objekte anzuzeigen oder zu verbergen. Seitenobjekte, die die für bestimmte Seiten eines Dokuments spezifizierten Seiteneigenschaften darstellen, können z. B. unter der Hierarchie des betreffenden Dokuments aufgeführt werden, um einem Bediener ihr Vorhandensein visuell anzuzeigen. Die Auswahl es Seitenobjekts ermöglicht dem Bediener das Editieren, die Ansicht oder eine sonstige Manipulation der Seiteneigenschaft. Für jede für ein bestimmtes Dokument spezifizierte Seiteneigenschaft kann ein Seitenobjekt angelegt sein.

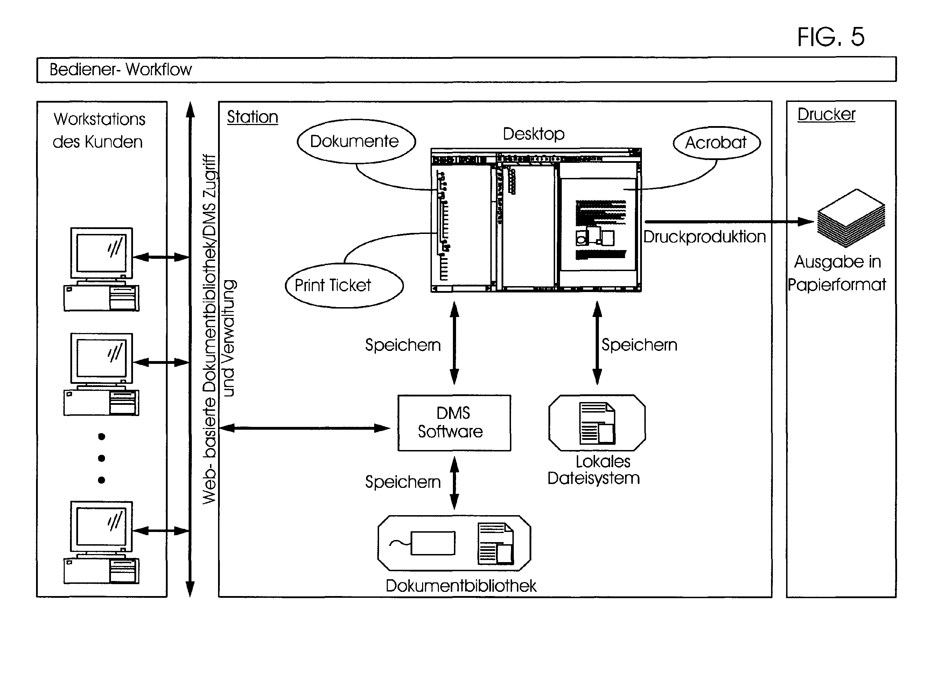

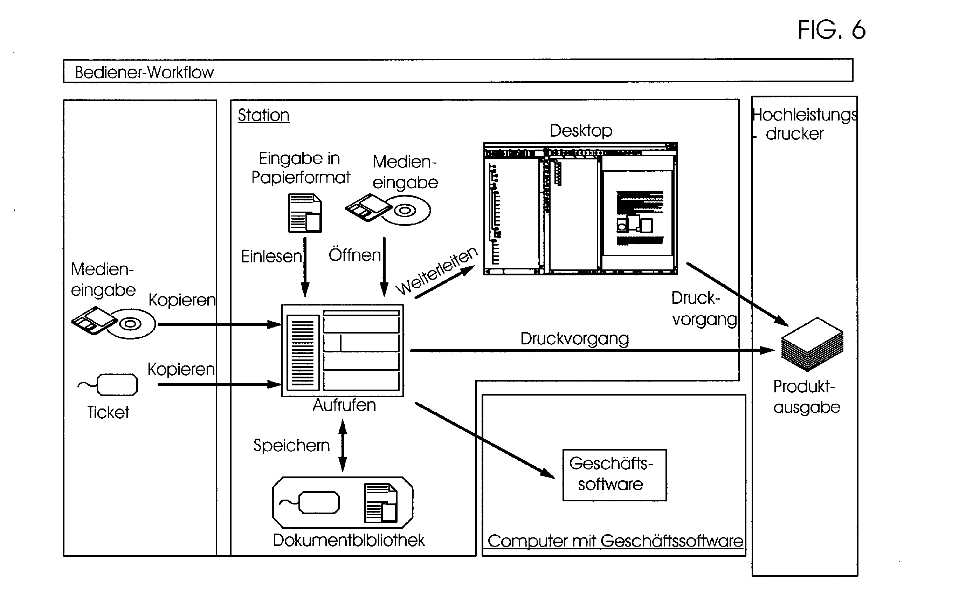

Das Display-Fenster 430 dient als intuitive visuelle Darstellung der Arbeit, die an einer Bearbeitungsstation 116 geleistet und fertiggestellt werden muss. Alles bleibt auf einfache und effiziente Weise organisiert, auch wenn der Bediener mehrere verschiedene Dokumente oder Aufträge öffnet und bearbeitet. Fig. 5 zeigt eine Darstellung der Integration der beschriebenen Workflow-Management-Software in den Workflow der Druckerei. Fig. 6 zeit eine alternative Darstellung der beschriebenen Workflow-Management-Software in den Workflow der Druckerei. In dieser Ausführungsform ist die Workflow-Komponente 304 zur Automatisierung und Standardisierung der Verfahrensschritte des Workflows vorgesehen.

In alternativen Ausführungsformen bzw. zusätzlich zu und als Erweiterung der beschriebenen Funktionalitäten können weitere Eigenschaften vorgesehen sein, z. B. auch Seitentickets, mobile Seiteneigenschaften, visuelle Seiteneigenschaften und die effiziente Auslastung der Ausgabegeräte. Seitentickets ähneln Job Tickets, außer dass sie ein Seitenobjekt oder mehrere Seitenobjekte enthalten, die jeweils eine bestimmte Seiteneigenschaft oder ein bestimmtes Seitenattribut und die Einstellungen für diese Eigenschaft oder dieses Attribut beinhalten. Ein Seitenticket dient als eine Art Sammelbecken verschiedener Seitenformatierungseigenschaften und -attribute, die bereits näher erläutert wurden. Ein Seitenticket bietet eine bequeme und effiziente Methode der Zuordnung einer Seiteneigenschaft oder mehrerer Seiteneigenschaften zu einer Seite oder einem Seitenbereich in einem Dokument. Die Workflow-Management-Software enthält die Funktionalität der visuellen Darstellung von Seitentickets auf dem Desktop 302 auf dieselbe Weise wie andere Objekte und ermöglicht die Erzeugung und Veränderung Seitentickets sowie deren Verknüpfung mit Dokumenten oder zusammengesetzten Dokumenten. In einer bevorzugten Ausführungsform kann ein Bediener die in einem Seitenticket enthaltenen Seiteneigenschaften anwenden, indem er einfach das Seitenticket auf dem Desktop 302 auf eine bestimmte Seite oder einen Seitenbereich in der Anzeige 306 zieht. Durch diese Aktion werden alle im Seitenticket enthaltenen Seiteneigenschaften und deren Einstellungen auf die ausgewählten Seiten angewandt. Man kann z. B. ein Seitenticket definieren, das einen linken Seitenrand für einen späteren Bindevorgang einstellt, als Farbe des zu verwendenden Papiers blau festlegt und bestimmt, dass die Seite dreifach gelocht werden soll. Diese Eigenschaften müssen nicht einzeln für jede gewünschte Seite definiert werden, sondern können einmal in einem Seitenticket definiert werden, das dann auf die ausgewählten Seiten gezogen wird. Dies ermöglicht die Erstellung von Seitenticket-Bibliotheken, die standardisierte Seitentickets enthalten, von denen jedes übliche Kombinationen von Seiteneigenschaften enthält. Wenn man in den bevorzugten Ausführungsformen ein Seitenticket auf ein Dokument oder ein zusammengesetztes Dokument zieht, so bewirkt dies zusätzlich zur Anwendung dieser Eigenschaften auf die Seiten des Dokuments in der oben beschriebenen Weise die Erzeugung von Seitenobjekten für die betreffenden in Seiteneigenschaften, die in der Hierarchie des Dokuments erzeugt werde sollen.

In einer alternativen Ausführungsform werden mobile Seiteneigenschaften ausgeführt. Eine Seiteneigenschaft ist typischerweise einer bestimmten Seitenzahl in einem Dokument zugeordnet und nicht der Seite selbst. Wird die Seite an eine andere Stelle im selben oder in einem anderen Dokument verschoben, werden u. U. die Seiteneigenschaften nicht automatisch mit verschoben. Durch die Anwendung mobiler Seiteneigenschaften sind die Seiteneigenschaften mit der Seite verknüpft und werden automatisch mit verschoben. Mobile Seiteneigenschaften werden in einen ungenutzten Teil des druckfertigen Formatcodes eingeschrieben. Dies erfolgt vorzugsweise mittels der erweiterbaren Auszeichnungssprache (extensible mark-up language) XML, wie sie in der Beschreibung der XML 1.0 von der W3C XML Working Group, REC-XML-0210 definiert ist. In der bevorzugten Ausführungsform bleiben die Seiteneigenschaften getrennt vom Dokument selbst, werden aber eigenständig visuell auf dem Desktop 302 als Seitenobjekte innerhalb der Hierarchie des Dokuments dargestellt, um eine intuitive Darstellung des Vorhandenseins dieser Eigenschaft sowie einen intuitiven Zugang zu der Funktionalität zum Editieren und Verändern zu bieten. Die Funktionalität mobiler Seiteneigenschaften kann unabhängig von einer objektorientierten Bedienerschnittstelle implementiert werden.

In einer weiteren alternativen Ausführungsform wird die Anwendung von bestimmten Seiteneigenschaften oder Dokumenteigenschaften in der Anzeige 306 visuell dargestellt. Die Anwendung einer Seiteneigenschaft für Dreifachlochung bedeutet z. B., dass in der visuellen Darstellung der gewählten Seiten drei Löcher erscheinen. Dies ermöglicht es dem Bediener, sich die Ergebnisse der Seiteneigenschaft anzeigen zu lassen und beispielsweise zu entscheiden, ob sich der Text der Seite zu nah an der Lochung befindet. Obwohl die Seiten- oder Dokumenteigenschaften auf der Anzeige sichtbar sind, sind sie in der Weise in den druckfertigen Formatcode eingeschrieben, dass sie nicht mit ausgedruckt werden, wenn das Dokument an das Ausgabegerät geschickt wird. Die Logik, die die visuelle Darstellung der Seiten- und Dokumenteigenschaften umsetzt, kennt vorzugsweise die Eigenschaften und Funktionen des gewählten Ausgabegeräts und weiß z. B., dass die automatische Heftvorrichtung eines Druckers entlang der linken Kante des Papiers heftet, während ein anderes Ausgabegerät entlang der oberen Kante heftet. Daher entscheidet die Logik, wo die Heftung für das gewählte Ausgabegerät dargestellt werden muss, wenn der Bediener die Seiteneigenschaft "Heften" wählt.

Gemäß einer weiteren Ausführungsform enthält die Workflow-Management-Software eine Funktionalität zur effizienten Nutzung der verschiedenen Ausgabegeräte unter Berücksichtigung der Eigenschaften, die für einen bestimmten Auftrag erforderlich sind, und der unterschiedlichen Betriebskosten. Diese unterschiedlichen Eigenschaften umfassen Mehrfarben- oder Schwarz-Weiß-Druck, die Auflösung und die Größe des Papiers. Es werden z. B. zunehmend farbige Seiten mit schwarzweißen Seiten im selben Dokument kombiniert. Dies stellt natürlich gewisse Anforderungen an das Ausgabegerät, mit dem das Produkt gedruckt wird. Wird ein derartiges Dokument an ein Farbdruckgerät geschickt, so wird es zwar gedruckt, aber mit hohen Kosten, da der Farbdruck in der Regel teurer ist als der Schwarzweißdruck. Wird der Druckauftrag dagegen an einen Schwarzweiß-Drucker geschickt, so wird er relativ kostengünstig ausgeführt, die Farbseiten werden aber nicht farbig ausgedruckt. Der Auftrag kann nun von Hand in zwei separate Aufträge aufgeteilt werden, so dass die farbigen Seiten an den Farbdrucker und die schwarzweißen Seiten an den Schwarzweißdrucker geschickt werden und die Seiten anschließend zum fertigen Druckprodukt zusammengeführt werden. Dies ist jedoch ein komplizierter Prozess, wenn das Produkt in hoher Auflage produziert werden soll. Außerdem erschwert das Einfügen eines manuellen Zusammentragvorgangs die Ausnutzung von automatisierten Weiterverarbeitungssystemen.

In einer bevorzugten Ausführungsform hat der Bediener die Möglichkeit, Seiten in einem Dokument bei der Bearbeitung des Druckauftrags zu kennzeichnen, damit diese an ein bestimmtes Ausgabegerät oder Bearbeitungsgerät geleitet werden, indem der Seite ein besonders definiertes Seitenattribut zugeordnet wird. Das Attribut zeigt die gewünschten oder notwendigen Eigenschaften des Ausgabegeräts an, um sicherzustellen, dass die Seite mit dem gewünschten Ergebnis gedruckt wird. Das Attribut kann z. B. angeben, dass ein Farbdruck-Ausgabegerät gewünscht oder erforderlich ist. Dies ermöglicht es dem Bediener, bestimmte Seiten zu bestimmten und zu optimieren, um die Eigenschaften der verschiedenen verfügbaren Ausgabegeräte effizient zu nutzen. Der größte Teil des Dokuments wird in der Regel von einem Ausgabegerät gedruckt, während nur ein Teil der Seiten an ein anderes Gerät geleitet wird (z. B. eine geringe Anzahl mehrfarbiger Seiten in einem überwiegend schwarzweißen Dokument). Der Bediener definiert ferner, welche Seiten zum Hauptbestandteil des Dokuments gehören und welche Seiten die Ausnahmen bilden, die separat produziert werden müssen.

Wenn der Auftrag an den Druckserver geleitet wird, erfasst dieser die Kennzeichnungen/Attribute und leitet die Seiten automatisch an das geeignete Ausgabegerät. Der Druckserver umfasst einen Empfänger, der das Dokument empfängt und an eine Verteilerlogik schickt, die die Seiten liest und die besonderen Seitenattribute interpretiert. Der Verteiler kann als Software, Hardware oder eine Kombination aus beidem ausgebildet sein und ist mit Daten und Eigenschaften der verschiedenen in der Druckerei verfügbaren (internen und externen) Ausgabegeräte programmiert. Der Verteiler interpretiert das spezielle Attribut und versucht, ein geeignetes Ausgabegerät zu finden, das die über die gewünschten oder benötigten Eigenschaften zur Produktion der betreffenden Seite verfügt. Die Verteilung kann vollständig automatisch oder manuell oder als Kombination aus beidem erfolgen.

Wenn eine bestimmte Eigenschaft gewünscht oder nötig, aber nicht verfügbar ist, oder an einem Ausgabegerät eine zu große Warteschlange ist, kann der Verteiler automatisch oder durch manuellen Eingriff eines Bedieners die Entscheidung treffen, wie die betreffende Seite am besten gedruckt werden kann. Der Verteiler kann bestimmte vorgegebene Regeln enthalten, wie bestimmte Eigenschaftsanfragen gehandhabt werden. Eine dieser Regeln kann z. B. vorsehen, dass das gesamte Dokument von einem bestimmten Ausgabegerät gedruckt wird und bestimmte Attribute einiger Seiten ignoriert werden. Eine weitere Regel kann bestimmen, dass Eigenschaftsanfragen immer berücksichtigt werden müssen und die Seiten an Ausgabegeräte mit der gewünschten Eigenschaft gesandt werden. Weiterhin kann als Regel festgelegt werden, dass ein Eingriff durch einen Bediener gefordert wird, wenn eine Seite mit einer besonderen Eigenschaftsanfrage den Verteiler passiert, damit der Bediener die beste Handlungsweise wählt. Sobald das Ausgabegerät für die Seite gewählt ist, wird die Seite an ein Übermittlungselement geleitet, die die Seite zur abschließenden Produktion an das Ausgabegerät übermittelt.

Beim Ausdrucken der Seiten speichert der Druckserver den Hauptteil des Dokuments, während die Sonderseiten an einem bestimmten Ausgabegerät gedruckt werden. Anschließend signalisiert der Druckserver dem Bediener, dass die Sonderseiten entnommen und in die Zusammentrageinrichtung des Ausgabegeräts eingelegt werden können, das den Hauptteil des Dokuments drucken wird. Sobald dieser Vorgang abgeschlossen ist, sendet der Druckserver den Hauptteil des Dokuments an das Ausgabegerät und instruiert dieses, an der Stelle einer Sonderseite die benötigte Seite von den eingelegten Sonderseiten einzufügen. Dadurch entsteht ein vollständiges, fertiges Druckprodukt mit minimalen Eingriffen des Bedieners. Es sind natürlich zahlreiche Alternativen möglich, z. B. eine mechanische Verbindung zwischen den Ausgabegeräten, die die fertigen Produkte eines Gerätes zu der Zusammentrageinrichtung einer anderen Vorrichtung transportiert, um sie in ein Hauptdokument einzugliedern. Nachdem das fertige Dokument sich in einem Ausgabegerät befindet, können in-line Weiterverarbeitungsgeräte, z. B. Hefter oder sonstige Bindeeinrichtungen, zur Fertigstellung der Produkte eingesetzt werden.

Wie bereits erwähnt nimmt der Druckereiangestellte in einer herkömmlichen Druckerei den Druckauftrag in der Regel in Papierform und/oder in elektronischer Form vom Kunden im Kundenbereich der Druckerei entgegen. Der Angestellte im Kunden- oder Auftragsannahmebereich 104 nimmt ebenfalls die Kundenwünsche bezüglich des fertigen Druckprodukts entgegen. Dies bedeutet, dass der Angestellte Anweisungen erhält, wie das fertige Druckprodukt auszusehen hat. Der Angestellte bündelt alle diese Informationen und gegebenenfalls Originaldokumente. Ein weiterer Angestellter an der Bearbeitungsstation 106 übernimmt die gebündelten Informationen und/oder Originaldokumente und erzeugt ein elektronisches Job Ticket, das die globalen Eigenschaften oder Attribute des fertigen Druckprodukts beschreibt. Dieser Vorgang wird kompliziert, wenn der Kunde mehrere Elemente abliefert, die zusammen das fertige Endprodukt ergeben. Bei einem Druckauftrag, der sich aus mehreren Elementen oder Bestandteilen zusammensetzt, hat der Angestellte an der Bearbeitungsstation 106 die Aufgabe, die Bestandteile zu einem Dokument zusammenzuführen und ein elektronisches Job Ticket zu erzeugen, das für die Druckproduktion 108 verwendet wird. Demgemäß nimmt ein Angestellter im Bereich der Auftragsannahme 104 das Material des Kunden von diesem entgegen. Dabei hat der Angestellte im Bereich der Auftragsannahme 104 Zugang zu einem Computer.

Der Angestellte gibt die vom Kunden bereitgestellten Bestandteile des Druckauftrags in elektronischer Form in den Computer ein, beispielsweise mittels eines Scanners oder anderer Methoden. Der Computer im Bereich der Auftragsannahme 104 verfügt außerdem über Mittel, z. B. eine Tastatur oder eine Maus oder eine andere geeignete Eingabevorrichtung, mit denen der Bediener ein Job Ticket eingeben kann.

Der Angestellte nutzt die Eingabevorrichtung, um die einzelnen elektronischen Dokumente in der für das fertige Druckprodukt gewünschten Reihenfolge in einen Ordner, z. B. ein Dateiverzeichnis, zu stellen. Anschließend gibt der Angestellte die Informationen bezüglich des Job Tickets, das die globalen Dokumenteigenschaften oder -attribute für das fertige Druckprodukt enthält, in den Computer ein. Der Computer ist so programmiert, dass er ein elektronisches Job Ticket erzeugt, das alle vom Bediener eingegebenen Eigenschaften des Druckauftrags wiedergibt, wenn ein Bediener eine diesbezügliche Anweisung eingibt. Der Computer konvertiert alle Bestandteile des Dokuments automatisch in ein druckfertiges Format, z. B. PDF, und führt alle Bestandteile zusammen, so dass ein einziges Dokument in einem druckfertigen Format entsteht. Das elektronische Job Ticket wird an das Dokument angehängt. Das Ergebnis ist ein elektronischer Druckauftrag, der an die Auftragsbearbeitungsstation 106 übermittelt wird. Der Druckauftrag ist nun bereit für letzte Arbeitsschritte oder eine abschließende Genehmigung und kann zur Druckproduktion 108 weitergeleitet werden.

Diese Anordnung bietet mehrere Vorteile. Zunächst entfallen mehrere manuelle Arbeitsschritte, die normalerweise ein Bediener ausführen muss. D. h. es ist nicht nötig, jeden Bestandteil des Dokuments einzeln in der Bearbeitungsstation zu konvertieren und die einzelnen Bestandteile zu einem Dokument zusammenzufügen sowie die Informationen des Job Tickets an das Dokument anzuhängen. Weiterhin kann aufgrund dieser Anordnung ein weniger geschulter Angestellter die Bestandteile des Dokuments in den elektronischen Ordner der Arbeitsstation im Bereich der Auftragsannahme 104 stellen. Ein erfahrener Angestellter kann dann an den Auftragsbearbeitungsstationen 106 die abschließende Auftragsbearbeitung durchführen und den Druckauftrag zur Druckproduktion weiterleiten.

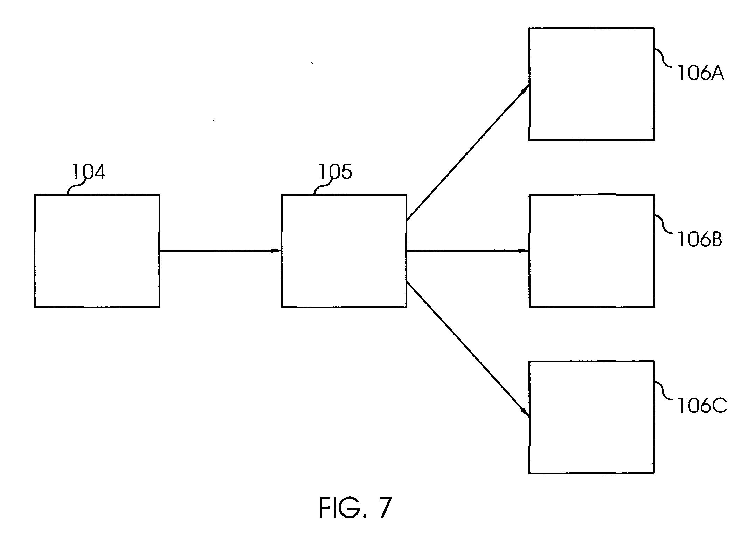

Fig. 7 zeigt eine weitere bevorzugte Ausführungsform der vorliegenden Erfindung, die eine flexible Weiterleitung des Druckauftrags an verschiedene Auftragsbearbeitungsstationen ermöglicht. Eine große Druckerei verfügt in der Regel über mehrere Auftragsbearbeitungsstationen 106A, 106B, 106C usw. Um eine maximale Effizienz der Druckerei zu gewährleisten, müssen die verschiedenen Auftragsbearbeitungsstationen 106A, 106B, 106C vollständig ausgelastet sein. Normalerweise ist die Zuweisung von Druckaufträgen zu den Auftragsbearbeitungsstationen ein manueller Vorgang. Bei diesem herkömmlichen Ansatz entscheidet ein erfahrener Angestellter, welcher Druckauftrag an welcher Bearbeitungsstation 106A, 106B, 106C etc. ausgeführt wird. Die Angestellten, die die Bearbeitungsstationen bedienen, sind in der Regel erfahrenere Angestellte als die Angestellten im Bereich der Auftragsannahme 104. Diese größere Erfahrung ist nötig, da die Angestellten an den Bearbeitungsstationen den Druckauftrag sorgfältig für den Auflagendruck vorbereiten müssen. Ein Bearbeitungsfehler führt zu einer hohen Makulatur.

Gemäß der vorliegenden Erfindung wird der Vorgang des Zuteilens von Druckaufträgen zum Desktop der Bearbeitungsstation 106 mittels einer Vorrichtung 105 zum Zuteilen von Bearbeitungsstationen, im Folgenden auch Verteiler 105 genannt, automatisiert. Der Verteiler 105 kann z. B. als ein Computer ausgebildet sein, der so programmiert ist, dass er Druckaufträge von den Workstations im Bereich der Auftragsannahme 104 empfängt und einen Algorithmus ablaufen lässt, der auf der Basis der Attribute der einzelnen Bearbeitungsstationen 106 und/oder der Attribute eines bestimmten Auftrags entscheidet, wie die einzelnen Bearbeitungsstationen 106 am besten ausgelastet werden können. Der Verteiler 105 wendet dabei bei der Erzeugung des Druckauftrags bestimmte Regeln auf den elektronischen Druckauftrag an. In einer Ausführungsform wird diese Entscheidung anhand der Anzahl von Druckaufträgen getroffen, die den einzelnen Stationen bereits zugewiesen sind, und der Auftrag an die entsprechende Station geleitet. Demgemäß ist die Anzahl der Aufträge, die an den einzelnen Stationen bereits anstehen, ein Attribut der Bearbeitungsstationen. Außerdem ist der Verteiler 105 so programmiert, dass er bestimmte Regeln befolgt, die eine Zuweisung der Druckaufträge auf der Basis der Eigenschaften des Bedieners an jeder der Stationen 106 ermöglichen. Vorzugsweise wird jeder Station 106 ein Bediener zugeordnet, dessen Eigenschaften in den Verteiler 106 eingegeben werden. Die Eigenschaften des Bedieners umfassen z. B. den Kenntnisstand des Bedieners und/oder dessen Druckereierfahrung. Wenn ein Bediener von einer Bearbeitungsstation an eine andere wechselt, verändern sich die Bedienereigenschaften, und die Veränderung wird in den Verteiler 105 eingegeben.

Ein weiteres Attribut, das der Verteiler 105 verwendet, können die Attribute des jeweiligen Druckauftrags selbst sein. Es ist z. B. möglich, dass ein bestimmter Auftrag Attribute aufweist, die eine bestimmte Fähigkeit des Bedieners erfordern. Der Verteiler 105 erhält dann als Eingabe die bestimmten Auftragserfordernisse und gleicht diese mit dem Kenntnisstand der Bediener an den Bearbeitungsstationen 106 ab.

Auf diese Weise erhält der Verteiler 105 eine Vielzahl von Variablen, die aus den Attributen des Druckauftrags und den Attributen der Bearbeitungsstationen bestehen. Der Verteiler 104 bestimmt dann die effizienteste Auslastung der einzelnen Bearbeitungsstationen 106A, 106B, 106C.

In dieser Ausführungsform ist vorzugsweise vorgesehen, dass der Bediener an einer Bearbeitungsstation 106 ein Signal erhält, wenn ein neuer Druckauftrag an den Desktop seiner Bearbeitungsstation 106 geleitet wird.

Das System umfasst weiterhin vorzugsweise einen Mechanismus, mittels dessen der Bediener Druckaufträge manuell von einer Bearbeitungsstation an eine andere Bearbeitungsstation übermitteln kann. Diese manuelle Weiterleitung ermöglicht eine flexible Reaktion auf unvorhergesehene Ereignisse, wenn z. B. ein Bediener seine Bearbeitungsstation verlassen muss.

Die Regeln des Verteilers 105 können vorzugsweise jederzeit geändert werden. Diese Anordnung bietet mehrere Vorteile, indem sie z. B. die Weiterleitung von Druckaufträgen von den Computern im Bereich der Auftragsannahme 104 an die Bearbeitungsstationen automatisiert und optimiert. Die Anordnung ist eine einfache Lösung, einen bestimmten Druckauftrag kundenorientiert und kostensparend auszuführen.

Eine weitere Ausführungsform der Erfindung betrifft das Bedrucken von Registerblättern oder anderen Ordnungselementen. Zum Bedrucken von Registerblättern müssen diese in einem separaten Dokument erzeugt werden und anschließend mittels drag and drop an die korrekte Position im fertigen Dokument gezogen werden. In einer Umgebung, in der Dokumente aus vom Kunden gelieferten vorgefertigten Bestandteilen zusammengefügt werden, kann dies Schwierigkeiten bereiten. Wenn z. B. ein Kunde Bedienungsanleitungen für Maschinen drucken lassen will, die er herstellt und die auf jeden einzelnen Kunden zugeschnitten werden sollen, so erhält die Dokumentationsabteilung eine Auswahlliste von der Produktionsabteilung, die eine Liste der Dokumentelemente enthält, die die gesamte Dokumentation bilden. Ein Beispiel hierfür könnte sein, dass ein Kunde ein Drucksystem bestellt, das nur eine Weiterbearbeitungsstation enthält. Dieser Kunde erhält nur die Bedienungsanleitung für die Druckvorrichtung und die Bedienungsanleitung für die Weiterbearbeitungsstation. Ein zweiter Kunde bestellt ein Drucksystem, das zusätzlich zur Standardausrüstung eine Stapelvorrichtung und eine Station zur Herstellung von Broschüren umfasst. Dieser Kunde erhält also die Bedienungsanleitung für die zwei Aggregate sowie die grundlegende Bedienungsanleitung. Die Abschnitte der Dokumentation sind durch bedruckte Registerblätter getrennt, damit sie leichter auffindbar sind. Die Registerblätter enthalten den Name des Untersystems, das im folgenden Kapitel beschrieben wird. In Abhängigkeit von der Anzahl der Kapitel im Ordner werden die verschiedenen Kapitelseiten auf unterschiedliche Seiten der Registerblätter oder der anderen Ordnungselemente gedruckt.

Um die Flexibilität zu gewährleisten, den Inhalt der Registerblätter auf ein beliebiges Registerblatt eines geordneten Registers zu drucken, kann der Inhalt der Registerblätter nicht als normale Seite eines Dokuments gespeichert werden. Vorzugsweise ist vorgesehen, dass ein Kennzeichnungselement mitgespeichert wird, das anzeigt, dass eine Seite einer PDF-Datei ein Registerblatt ist und die Information enthält, die auf das Registerblatt gedruckt werden soll. Dies ermöglicht es dem Bediener, die Seite im Dokument zu verschieben oder sie in ein anderes Dokument zu kopieren, ohne dass die betreffende Information verloren geht. Wenn ein derartige Seiten enthaltendes Produkt gedruckt wird, so überprüft das Druckausgabemodul das PDF-Dokument und produziert den Registeraufdruck an der korrekten Position auf der Seite. Dadurch muss nur das Ausgabemodul die Anzahl von Ordnungsmedien in einem geordneten Register kennen.

Außerdem muss bei der Erstellung des Dokuments der verfügbare Platz auf dem Registerblatt berücksichtigt werden. Wenn zu einem Zeitpunkt bei der Erstellung der Seite davon ausgegangen wird, dass ein fünfblättriges Register verwendet wird, beim eigentlichen Druckvorgang jedoch ein neunblättriges Register verwendet wird, so steht nur fast die Hälfte des Platzes zur Verfügung. Zur Speicherung derartiger Informationen auf der Seitenebene können so genannte private PDF-Seitenobjekte verwendet werden. Durch diese kann die Seite innerhalb eines Dokuments verschoben oder in ein anderes Dokument kopiert werden, ohne dass darauf geachtet werden muss, welche Seiten auf Registerblätter gedruckt werden. Eine derartige Konfiguration erhöht die Flexibilität, so dass der Inhalt von Registerblättern so spät wie möglich (d. h. beim Drucken) positioniert werden muss. Außerdem muss der Bearbeiter, der den Dokumentinhalt erstellt, bei der bevorzugten Konfiguration nicht wissen, welches geordnete Register beim Druck verwendet wird.

Die vorangegangene ausführliche Beschreibung soll nur erläuternd und nicht einschränkend interpretiert werden. Der Grundgedanke und der Bereich der vorliegenden Erfindung werden durch die nachfolgenden Ansprüche mit allen Äquivalenten definiert.

### Liste der Bezugszeichen

- 100: Druckproduktions-Workflow
- 102: Auftragsbeginn
- 104: Auftragseingang
- 105: Verteiler
- 106: Auftragsbearbeitung
- 106A, B, C: Bearbeitungsstationen
- 108: Druckproduktion
- 110: Auftragsvollendung
- 112: Netzwerk
- 114: Computer im Bereich der Auftragsannahme
- 116: Bearbeitungsstationen
- 118: Netzwerkserver
- 120: Druckserver
- 122: Ausgabegerät
- 200: Bediener-Workflow
- 202: Eingabestadium
- 204: Vorbereitungsphase
- 206: Produktionsstadium
- 208: Eingabequellen
- 300: Software-Architektur
- 302: Desktop
- 304: Workflowkomponente
- 306: Anzeige
- 308: Anwenderprogramm-Schnittstelle
- 400: Display einer grafischen Bedienerschnittstelle (GUI)
- 402: Menü
- 404: Symbolleiste
- 406: Dokumentmenü
- 408: Ticketmenü
- 410: Buchmenü
- 412: Auftragsmenü
- 414: Hilfemenü
- 416: Symbol "neues Objekt"
- 418: Symbol "Objekt öffnen"
- 420: Symbol "Zugriff auf Dokumentbibliothek"
- 422: Symbol "Ausschneiden"
- 424: Symbol "Kopieren"
- 426: Symbol "Einfügen"
- 428: Symbol "Drucken"
- 430: hierarchische Ansicht
- 432: Scroll-Leiste
- 434: Dokumentobjekt
- 436: Buchobjekt
- 438: Ticketobjekt
- 440: Baumstruktur
- 442: Desktopobjekt

## Patentansprüche

1. Eine Vorrichtung zur Bereitstellung von Druckanweisungen für ein gedrucktes Endprodukt an eine Bearbeitungsstation (106), wobei das gedruckte Endprodukt eine Vielzahl von Dokumenten in einer vorgegebenen Reihenfolge umfasst, die jeweils Inhalt und Formatierung enthalten, mit einer Auftragsannahmestation (104), die einen Computer (114) umfasst, und einer mit dem Computer (114) verbundenen Eingabevorrichtung zur Eingabe von Anweisungen in den Computer (114);
**dadurch gekennzeichnet,**
**dass** der Computer (114) gemäß an der Eingabevorrichtung eingegebenen Anweisungen die Vielzahl von Dokumenten in einen elektronischen Ordner stellt und die Dokumente in dem Ordner in der für das gedruckte Endprodukt gewünschten Reihenfolge anordnet;

2. Vorrichtung nach Anspruch 1,
**dadurch gekennzeichnet,**
**dass** die Vorrichtung einen Empfänger (114) zur Aufnahme der Dokumente in elektronischer Form an der Auftragsannahmestation (104) aufweist und in der Weise verbunden ist, dass der Empfänger die Dokumente in elektronischer Form an den Computer (114) übermittelt.

3. Vorrichtung nach einem der Ansprüche 1 bis 2,
**dadurch gekennzeichnet,**
**dass** der Computer (114) die Vielzahl von Dokumenten automatisch in ein druckfertiges Format bringt und zusammenfügt, so dass ein einziges Dokument in einem druckfertigen Format entsteht

4. Vorrichtung nach einem der Ansprüche 1 bis 3,
**dadurch gekennzeichnet,**
**dass** der Computer (114) ein elektronisches Job Ticket erzeugt, das globale Attribute für das gedruckte Endprodukt enthält.

5. Ein Verfahren zur Bereitstellung von Anweisungen bezüglich eines gedruckten Endprodukts an eine Bearbeitungsstation (122), wobei das gedruckte Endprodukt eine Vielzahl von Dokumenten in einer vorgegebenen Reihenfolge umfasst, die jeweils Inhalt und Formatierung enthalten,
**gekennzeichnet durch**
die folgenden Verfahrensschritte:
Empfangen der Vielzahl von Dokumenten in elektronischem Format von einer Auftragsannahmestation (104);
Übermitteln der Vielzahl von Dokumenten in elektronischem Format an einen Computer (114);
Einstellen der Vielzahl von Dokumenten in einen elektronischen Ordner im Computer (114) und
Anordnen der Vielzahl von Dokumenten im Ordner in der für das gedruckte Endprodukt gewünschten Reihenfolge, wobei der Computer (114) die Vielzahl von Dokumenten automatisch in ein druckfertiges Format konvertiert und die Vielzahl von Dokumenten zusammenfügt, um ein einziges Dokument im druckfertigen Format zu erzeugen.

6. Verfahren nach Anspruch 5,
**dadurch gekennzeichnet,**
**dass** der Computer (114) automatisch ein Job Ticket erzeugt, das globale Attribute für das gedruckte Endprodukt enthält.
